(19) Europäisches Patentamt
European Patent Office
Office européen des brevets

(11) EP 2 823 002 B1

(12) **EUROPEAN PATENT SPECIFICATION**

(45) Date of publication and mention of the grant of the patent:
**25.05.2016 Bulletin 2016/21**

(21) Application number: **13709077.5**

(22) Date of filing: **05.03.2013**

(51) Int Cl.:
***C09D 11/322*** *(2014.01)* ***C09D 11/38*** *(2014.01)*

(86) International application number:
**PCT/EP2013/054432**

(87) International publication number:
**WO 2013/131924 (12.09.2013 Gazette 2013/37)**

(54) **INK COMPOSITION**

TINTENZUSAMMENSETZUNG

COMPOSITION D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2012 EP 12158219**

(43) Date of publication of application:
**14.01.2015 Bulletin 2015/03**

(73) Proprietor: **OCE-Technologies B.V.**
**5914 CA Venlo (NL)**

(72) Inventors:
- **EVERHARDUS, Roelof H.**
**NL-5943 BA Lomm (NL)**
- **VERCOULEN, Gerardus C.P.**
**NL-5941 EA Velden (NL)**
- **VAN GAGELDONK, Johannes F.J.**
**NL-5913 DA Venlo (NL)**
- **LENDERS, Johan P.J.**
**NL-6092 NC Leveroy (NL)**
- **VAN ROY, Antonius P.M.M.**
**NL-5985 PL Grashoek (NL)**

(56) References cited:
**EP-A1- 1 493 784**
**EP-A1- 1 908 806**
**US-A1- 2007 163 468**
**US-A1- 2010 247 874**
**US-A1- 2011 236 649**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 823 002 B1

## Description

### FIELD OF THE INVENTION

The present invention relates to a latex ink composition, suitable for use in an inkjet printing process.

### BACKGROUND ART

Latex inks are known in the art. For example EP 2 233 309 A2 discloses an ink composition containing water in an amount of 20-90 weight% based on the total weight of the ink, a pigment and a resin, which may be a water dispersed resin (i.e. a latex). WO 2011/021591 discloses an inkjet ink containing a water-dispersible colorant, a water-soluble organic solvent, a surfactant, a penetrant and water.
Both mentioned prior art documents disclose methods for printing said inks onto media normally used in process printing or offset printing (e.g. machine coated (MC) or offset coated media).
A disadvantage of known latex ink compositions is that printing of such inks on media having relatively poor water absorption properties (in the context of the present invention termed "poorly absorbing media"), such as machine coated or offset coated media, may result in all kinds of print artifacts (e.g. streakiness, coalescence, puddling and/or dewetting) and hence in unsatisfactory print quality. In particular in a highly productive single pass inkjet process on poorly absorbing media, streakiness (e.g. white regions in printed image) is considered a major problem.
Without wanting to be bound to any theory, streakiness may be caused (among others) by insufficient spreading of ink drops once they have landed on the print substrate. In other words, the dotgain (i.e. the ratio of the diameter of a printed dot on a medium and the diameter of an ink droplet in air) is too low.
Known aqueous inks, including known latex inks show poor spreading behavior on said print media which results in insufficient dotgain and hence to streakiness of the printed image.
In addition, the spreading behavior of printed ink drops deteriorates upon drying of the ink (i.e. evaporation of water). Without wanting to be bound to any theory it is believed that this is caused by the increase of the surface tension of printed ink drops caused by the evaporation of water. The increase of the surface tension may cause puddling (coalescence) and/or dewetting.
There is therefore room for improvement of latex inks in relation to print quality, in particular on poorly absorbing media (e.g. machine coated or offset coated media), without compromising print quality on conventional media suitable for aqueous inkjet printing and plain paper.
It is therefore an object of the present invention to provide a latex ink composition suitable for obtaining a high print quality on a wide range of media, in particular an ink composition showing an improved dotgain on poorly absorbing media, such as machine coated or offset coated media in order to prevent or at least mitigate streakiness when used in a highly productive single pass printing process.
It is another object of the present invention to provide a latex ink composition that maintains a low surface tension during drying in order to prevent or at least mitigate puddling and dewetting, in particular on poorly absorbing media, such as machine coated or offset coated media.

### SUMMARY OF THE INVENTION

These objects are at least partly achieved by providing an ink composition suitable for being ejected from an inkjet marking device at an operating temperature, the ink composition comprising:

- 1 - 40 weight% of a water-dispersible resin;
- 0.5 - 15 weight% of a water-dispersible colorant;
- 20 - 80 weight% water;
- 0 - 75 weight% of a cosolvent;
- 0.01 - 3 weight% of a surfactant;

wherein all amounts are relative to the total ink composition, and wherein the ink composition has a dynamic surface tension of below 35 mN/m and a static surface tension of above 21 mN/m both determined at the operating temperature.
In the context of the present invention, the dynamic surface tension is defined as the surface tension determined according to the bubble pressure method at a bubble frequency of 10 Hz. The static surface tension is defined as the surface tension determined at a bubble frequency of 0.1 Hz. See experimental part for details of the bubble pressure method.
The operating temperature (also termed jetting temperature) is defined as the operating temperature of an inkjet marking device adapted to eject (i.e. jet) droplets of an ink composition. The jetting temperature for an aqueous

ink composition according to the present invention is preferably between 15°C and 50°C, more preferably between 20°C and 40°C, even more preferably between 25°C and 35°C.

The ink composition may comprise between 0.01 and 3 weight% of a mixture of surfactants comprising at least one surfactant of a first type selected from the group consisting of acetylene glycols and ethoxylated acetylene glycols and at least one surfactant of a second type selected from the group consisting of silicone surfactants and fluorochemical surfactants, with the proviso that if the mixture of surfactants comprises an acetylene glycol and an ethoxylated acetylene glycol, which are both surfactants of the first type, the presence of the at least one surfactant of the second type in the mixture of surfactants is optional. The mixture of surfactants may thus consist of an acetylene glycol and an ethoxylated acetylene glycol.

Therefore the present invention pertains to an ink composition, suitable for being ejected from an inkjet marking device at an operating temperature of between 15°C and 50°C, the ink composition comprising:

- 1 - 40 weight% of a water-dispersible resin;
- 0.5 - 15 weight% of a water-dispersible colorant;
- 20 - 80 weight% water;
- 0 - 75 weight% of a cosolvent;
- 0.01 - 3 weight% of a mixture of surfactants, comprising at least one surfactant of a first type selected from the group consisting of acetylene glycols and ethoxylated acetylene glycols and at least one surfactant of a second type selected from the group consisting of silicone surfactants and fluorochemical surfactants, with the proviso that if the mixture of surfactants comprises an acetylene glycol and an ethoxylated acetylene glycol, which are both surfactants of the first type, the presence of the at least one surfactant of the second type in the mixture of surfactants is optional;

wherein all amounts are relative to the total ink composition, and wherein the ink composition has a dynamic surface tension of below 35 mN/m measured at 10Hz and a static surface tension measured at 0.1 Hz of above 21 mN/m both determined at the operating temperature with the bubble pressure method, wherein the amount of the mixture of surfactants is sufficient to obtain said dynamic and static surface tensions.

In an embodiment, the surfactant of the first type is selected from the group consisting of acetylene glycols and ethoxylated acetylene glycols and the surfactant of the second type is selected from the group consisting of silicone surfactants and fluorochemical surfactants.

In an embodiment, the surfactant of the first type is an ethoxylated acetylene glycol and the surfactant of the second type is selected from the group consisting of silicone surfactants and fluorochemical surfactants.

In an embodiment, the surfactant of the first type is an ethoxylated acetylene glycol and the surfactant of the second type is a silicone surfactant, preferably a siloxane surfactant, more preferably an ethoxylated siloxane surfactant.

In an embodiment, the surfactant of the first type is an ethoxylated acetylene glycol and the surfactant of the second type is a fluorochemical surfactant.

In an embodiment, the mixture of surfactants additionally comprises a surfactant of a third type, in particular a dialkyl sulfosuccinate salt, such as sodium dioctyl sulfosuccinate (AOT).

The required dotgain for avoiding or at least mitigating streakiness in a print can be empirically determined. For example in a single pass 600 dpi inkjet printing process, it has been empirically determined that a dot size (ink dots on a receiving medium) of at least 75 μm is required to avoid or at least mitigate streakiness in the halftone prints on machine coated or offset coated media. Using an inkjet printhead jetting 10 pl droplets (droplet diameter of 26,7 μm)a dotgain of 2.8 (minimum dotsize of 75 μm divided by the droplet diameter of 26.7 μm results in a required dotgain of 2.8) or higher is thus required.

The dotgain depends on the type of receiving medium and dynamic surface tension of the ink. The dotgain of an ink composition may vary a lot depending on the media type; hence different media may require differently tuned ink compositions.

Inventors have surprisingly found that the dynamic surface tension of an ink composition measured at a frequency of 10 Hz (i.e. contact times of 0.1 s) correlates very well with dotgain. Inventors have also found that a dotgain of 2.8 or more on a wide range of media can be obtained by an ink composition having a dynamic surface tension at 10 Hz of below 35 mN/m, preferably below 34 mN/m, more preferably below 33 mN/m, even more preferably below 32 mN/m measured at 10 Hz. by optimization of the cosolvent composition and the surfactant composition comprised in the latex ink composition.

A static surface tension of below 21 mN/m of the ink composition according to the present invention may cause wetting of the of the nozzle plate, in particular the outer surface of the nozzle plate adjacent to the nozzle (in other words the nozzle region). Wetting of the nozzle region may cause deterioration of the jetting properties of the inkjet marking device. In particular the jet angle may increase (skewness) and become unstable (e.g. fluctuating jet angle during operation). In a single pass (high speed) printing process is it very difficult to compensate for askew jetting nozzles, in particular when the skewness varies during printing.

It is therefore an additional advantage of the ink composition according to the present invention is that due to the fact that the static surface tension of the ink composition is above 21 mN/m, preferably above 22 mN/m, more preferably above 23 mN/m, even more preferably above 24 mN/m, the above problem is solved or at least mitigated.

In an embodiment, the ink composition has a static surface tension of below 30 mN/m, preferably below 29 mN/m, more preferably below 27 mN/m, measured at 0.1 Hz.

The static (i.e. measured at 0.1 Hz) and dynamic (i.e. measured at 10 Hz) surface tension of the ink composition may be tuned by suitably selecting one or more cosolvents in combination with one or more surfactants as listed below.

BRIEF DESCRIPTION OF THE DRAWINGS

The present invention will become more fully understood from the detailed description given herein below and accompanying schematical drawings which are given by way of illustration only and are not limitative of the invention, and wherein:

Fig. 1 shows a schematic representation of a correlation of the dynamic surface tension measured at 10 Hz and dotgain of ink compositions.

Fig. 2 shows a schematic representation of a drying curve (represented as viscosity increase over time) of an ink composition comprising an oligomeric and/or polymeric cosolvent in an effective amount.

Fig. 3 shows a schematic representations of an inkjet printing system.

Fig. 4 shows a schematic representation of an inkjet marking device: A) and B) assembly of inkjet heads; C) detailed view of a part of the assembly of inkjet heads.

DETAILED DESCRIPTION

**Print artifacts**

Without wanting to be bound to any theory, it is believed that the mechanisms described below provide explanations for the print artifacts streakiness, coalescence, puddling and dewetting respectively. Existing print artifacts are not limited to those exemplified below.

Streakiness

White spots or white areas/regions in the printed image may arise in inkjet printing when ejected ink drops that have landed on a receiving medium insufficiently spread. Spreading of ink drops on a receiving medium is determined by a delicate balance of a number of ink and media properties, among which the difference in surface tension between the ink and the surface of the print medium. In general, ink drops of an ink having a lower surface tension than the surface of the print medium show spreading behavior. In a scanning inkjet printing process, white spots may be masked by applying a multi-pass printing principle, such that ink drops may be printed in the white spots in a second or further pass of the print station across the print area. In a highly productive single pass printing process using a page wide print array white areas cannot be compensated for in this way. In such a printing process, the white spots may be regularly arranged, in particular aligned in the media transport direction, which may be observed as streakiness in the printed image. Especially in monochrome full coverage printed areas, alternating parallel lines of dark and light color (or even white) may be visible in the printed image.

Coalescence

Coalescence is a process that may occur on the surface of a print medium, wherein two or more ink drops are being unified into a single drop. If this process takes place without drop displacement, on a surface, the drops will connect to each other to create a film. If, however, the coalescence process is accompanied by drop displacement, the coalescence of adjacent printed drops will lead to the formation of puddles, a process termed puddling. In this case, the printed ink drops are no longer present at the intended location on the medium surface, but they are moving across the medium surface to a common location with adjacent ink drops.

Puddling

Puddling may occur when two (or more) ink droplets are printed close enough to each other such that the ink droplets touch each other. As a result droplets may move towards each other while coalescing. The displacement of the droplets is usually not symmetrical. The last jetted droplet tends to move the most. This displacement mechanism takes place at a time scale of ~100 μs.

Another very fast mechanism is taking place via a so called precursor film, which is an ink film at the perimeter of the printed ink drop and is a result of the impact of the ink drop with the print medium. The film represents a connection bridge between two (or more) adjacent drops and may initiate the coalescence of the ink droplets which may be accompanied by drop displacement. Similar to the above mechanism, this mechanism takes place on a time scale of ~100 μs.

Yet another mechanism leading to puddling is a more complex mechanism and comprises lateral absorption of ink into the print medium. The lateral absorption of ink into the print medium may form connection bridges via the print medium between adjacent ink droplets which are printed far enough from each other such that the ink droplets initially do not touch each other. This mechanism may lead to coalescence and eventually to puddling. The time scale of this mechanism is typically in the order of ~1 ms.

Dewetting

Puddles may also be formed by a de-wetting mechanism. In this mechanism, initially an ink film may be formed due to coalescence of ink drops. During drying of the ink film, inhomogeneous evaporation of ink components may occur, which may lead to a variation of the local surface energy of the ink film. Consequently, the film may (unevenly) break up and Marangoni flow like displacement may occur, eventually leading to a puddling structure on the surface of the print medium. This mechanism typically takes place on a time scale of ~1 s.

**Ink composition**

An ink composition according to the present invention comprises a water-dispersible resin, a water-dispersible colorant, water, a cosolvent, a surfactant and optionally other additives. The components of the inks will be described in detail in the next sections.

Water dispersible resin (Latex resin)

The inkjet ink according to the present invention contains a water-dispersible resin in view of the pigment fixability to recording media. As the water-dispersible resin, a water-dispersible resin excellent in film formability (image formability) and having high water repellency, high waterfastness, and high weatherability is useful in recording images having high waterfastness and high image density (high color developing ability). Examples of the water-dispersible resin include synthetic resins and natural polymer compounds.

Examples of the synthetic resins include polyester resins,, polyurethane resins, polyepoxy resins, polyamide resins, polyether resins, poly(meth)acrylic resins, acryl-silicone resins, fluorine-based resins, polyolefin resins, polystyrene-based resins, polybutadiene-based resins, polyvinyl acetate-based resins, polyvinyl alcohol-based resins, polyvinyl ester-based resins, polyvinyl chloride-based resins, polyacrylic acid-based resins, unsaturated carboxylic acid-based resins and copolymers such as styrene - acrylate copolymer resins, styrene-butadiene copolymer resins.

Examples of the natural polymer compounds include celluloses, rosins, and natural rubbers.

In an embodiment, the water dispersible resin used in the present invention may be made of a resin having a water soluble functional group such as a carboxylic group or a sulfonic group.

In an embodiment, the ink composition according to the present invention comprises a resin having a carboxylic group which has a small dissociation rate from the viewpoint of producing high speed aggregation effect of the water-dispersible resin. Since a carboxylic acid group tends to be influenced by a pH change, a dispersion state changes easily and its aggregation property is high. Examples of resins suitable for use in ink compositions according to the present embodiment are: an acrylic resin, a vinyl acetate resin, a styrene butadiene resin, a vinyl chloride resin, an acrylic styrene resin, a butadiene resin and styrene resin. As for the resin component of the water-dispersible resin, it is preferable that it is a polymer having both a hydrophilic portion and a hydrophobic part in the molecule. By having a hydrophobic part, it is possible that a hydrophobic part will be orientated to the inside of the water-dispersible resin, and a hydrophilic portion will be effectively orientated to the outside of the water-dispersible resin. As a result, the change of a dispersion state in response to the pH change of a liquid will become larger, and aggregation of the ink will be performed more efficiently.

Examples of commercially available water-dispersible resin emulsions include: Joncryl 537 and 7640 (styrene-acrylic resin emulsion, made by Johnson Polymer Co., Ltd.), Microgel E-1002 and E-5002 (styrene-acrylic resin emulsion,

made by Nippon Paint Co., Ltd.), Voncoat 4001 (acrylic resin emulsion, made by Dainippon Ink and Chemicals Co., Ltd.), Voncoat 5454 (styrene-acrylic resin emulsion, made by Dainippon Ink and Chemicals Co., Ltd.), SAE-1014 (styrene-acrylic resin emulsion, made by Zeon Japan Co., Ltd.), Jurymer ET-410 (acrylic resin emulsion, made by Nihon Junyaku Co., Ltd.), Aron HD-5 and A-104 (acrylic resin emulsion, made by Toa Gosei Co., Ltd.), Saibinol SK-200 (acrylic resin emulsion, made by Saiden Chemical Industry Co., Ltd.), and Zaikthene L (acrylic resin emulsion, made by Sumitomo Seika Chemicals Co., Ltd.), acrylic copolymer emulsions of DSM Neoresins, e.g. the NeoCryl product line, in particular acrylic styrene copolymer emulsions NeoCryl A-662, NeoCryl A-1131, NeoCryl A-2091, NeoCryl A-550, NeoCryl BT-101, NeoCryl SR-270, NeoCryl XK-52, NeoCryl XK-39, NeoCryl A-1044, NeoCryl A-1049, NeoCryl A-1110, NeoCryl A-1120, NeoCryl A-1127, NeoCryl A-2092, NeoCryl A-2099, NeoCryl A-308, NeoCryl A-45, NeoCryl A-615, NeoCryl BT-24, NeoCryl BT-26, NeoCryl BT-36, NeoCryl XK-15, NeoCryl X-151, NeoCryl XK-232, NeoCryl XK-234, NeoCryl XK-237, NeoCryl XK-238-NeoCryl XK-86, NeoCryl XK-90 and NeoCryl XK-95 However, the water-dispersible resin emulsion is not limited to these examples.

As the fluorine-based resin, fluorine-based resin fine particles having a fluoroolefin unit are preferred. Of these, fluorine-containing resin fine particles containing a fluoroolefin unit and a vinylether unit are particularly preferable. The fluoroolefin unit is not particularly limited and may be suitably selected in accordance with the intended use. Examples thereof include $-CF_2CF_2-$, $-CF_2CF(CF_3)-$, and $-CF_2CFCl-$.

The vinylether unit is not particularly limited and may be suitably selected in accordance with the intended use. Examples thereof include $-C(R_a)HC(OR_b)-$; wherein $R_a$ is a hydrogen atom or a methyl group; and wherein $R_b$ may be selected from the group consisting of $-CH_2R_c$, $-C_2H_4R_c$, $-C_3H_6R_c$, $-C_4H_8R_c$ and $-C_5H_{10}R_c$, wherein $R_c$ is selected from the group consisting of a hydrogen atom (-H), an hydroxy group (-OH) or a carboxylic acid group (-COOH)

As the fluorine-containing vinylether-based resin fine particles containing a fluoroolefin unit and a vinylether unit, an alternated copolymer, in which the fluoroolefin unit and the vinylether unit are alternately copolymerized, is preferable. As such a fluorine-based resin fine particles, a suitably synthesized compound may be used and a commercially available product may be used. Examples of the commercially available products include FLUONATE FEM-500 and FEM-600, DICGUARD F-52S, F-90, F-90M, F-90N and AQUAFURFURAN TE-5A produced by Dainippon Ink Chemical Industries Co., Ltd.; LUMIFLON FE4300, FE4500, FE4400, ASAHI GUARD AG-7105, AG-950, AG-7600, AG-7000, and AG- 1100 produced by Asahi Glass Co., Ltd.

The water-dispersible resin may be used in the form of a homopolymer, a copolymer or a composite resin, and all of water-dispersible resins having a monophase structure or core-shell structure and those prepared by power-feed emulsion polymerization may be used.

As the water-dispersible resin, it is possible to use a resin which in itself has a hydrophilic group and hence has a certain degree of self-dispersibility, and a resin which in itself has no dispersibility but to which the dispersibility is imparted with use of a surfactant and/or another resin having a hydrophilic group. Among these resins, an emulsion of a resin obtained by emulsion polymerization or suspension polymerization of an ionomer of a polyester resin or a polyurethane resin is most suitably used. In the case of emulsion polymerization of an unsaturated monomer, a resin dispersion is obtained by initiating a polymerization reaction in the dispersed monomer phase in the monomer in water emulsion. A polymerization initiator, a surfactant, a chain transfer agent, a chelating agent and a pH adjustor may be added to the monomer in water emulsion. Thus, a water-dispersed resin can be easily obtained, and the desired properties are easily obtained because the resin components can be varied.

As the unsaturated monomer, unsaturated carboxylic acids, monofunctional or polyfunctional (meth)acrylic acid ester monomers, (meth)acrylic acid amide monomers, aromatic vinyl monomers, vinyl cyano compound monomers, vinyl monomers, allyl compound monomers, olefin monomers, diene monomers, and oligomers having unsaturated carbons may be used alone or in combination. By combining these monomers, properties or the resulting resin can be flexibly modified. The properties of the resulting resin can also be modified with use of an oligomer type polymerization initiator, through a polymerization reaction or graft reaction.

Examples of the unsaturated carboxylic acids include acrylic acids, methacrylic acid, itaconic acids, fumaric acids, and maleic acids.

Examples of the monofunctional (meth)acrylic acid ester monomers include methyl methacrylate, ethyl methacrylate, isopropyl methacrylate, n-butyl methacrylate, isobutyl methacrylate, n-amyl methacrylate, isoamyl methacrylate, n-hexyl methacrylate, 2-ethylhexyl methacrylate, octyl methacrylate, decyl methacrylate, dodecyl methacrylate, octadecyl methacrylate, cyclohexyl methacrylate, phenyl methacrylate, benzyl methacrylate, glycidyl methacrylate, 2-hydroxyethyl methacrylate, 2-hydroxypropyl methacrylate, dimethylaminoethyl methacrylate, methacryloxyethyltrimethyl ammonium salt, 3-methacryloxypropyl trimethoxysilane, methyl acrylate, ethyl acrylate, isopropyl acrylate, n-butyl acrylate, isobutyl acrylate, n-amyl acrylate, isoamyl acrylate, n-hexyl acrylate, 2-ethylhexyl acrylate, octyl acrylate, decyl acrylate, dodecyl acrylate, octadecyl acrylate, cyclohexyl acrylate, phenyl acrylate, benzyl acrylate, glycidyl acrylate, 2-hydroxyethyl acrylate, 2-hydroxypropyl acrylate, dimethylaminoethyl acrylate, and acryloxyethyltrimethoxy ammonium salt.

Examples of the polyfunctional (meth)acrylic acid monomers include ethylene glycol dimethacrylate, diethylene glycol dimethacrylate, triethylene glycol dimethacrylate, polyethylene glycol dimethacrylate, 1, 3-butylene glycol dimethacrylate,

1,4-butylene glycol dimethacrylate, 1,6-hexanediol dimethacrylate, neopentyl glycol dimethacrylate, dipropylene glycol dimethacrylate, polypropylene glycol dimethacrylate, polybutylene glycol dimethacrylate, 2,2'-bis(4-methacryloxydiethoxyphenyl)propane, trimethylolpropane trimethacrylate, trimethylolethane trimethacrylate, polyethylene glycol diacrylate, triethylene glycol diacrylate, 1,3-butylene glycol diacrylate, 1,4-butylene glycol diacrylate, 1,6-hexanediol diacrylate, neopentyl glycol diacrylate, 1,9-nonanediol diacrylate, polypropylene glycol diacrylate, 2,2'-bis(4-acryloxypropyloxyphenyl)propane, 2,2'-bis(4-acryloxydiethoxyphenyl)propane, trimethylolpropane triacrylate, trimethylolethane triacrylate, tetramethylolmethane triacrylate, ditrimethylol tetraacrylate, tetramethylolmethane tetraacrylate, pentaerythritol tetraacrylate, and dipentaerythritol hexaacrylate.

Examples of the (meth)acrylic acid amide monomers include acrylamide, methacrylamide, N,N-dimethyacrylamide, methylene-bis-acrylamide, and 2-acrylamide-2-methylpropane sulfonic acid. Examples of the aromatic vinyl monomers include styrene, $\alpha$-methylstyrene, vinyltoluene, 4-t-butylstyrene, chlorostyrene, vinylanisole, vinylnaphthalene, and divinylbenzene.

Examples of the vinyl cyano compound monomers include acrylonitrile, and methacrylonitrile.

Examples of the vinyl monomers include vinyl acetate, vinylidene chloride, vinyl ether, vinyl ketone, vinylpyrrolidone, vinyl sulfonic acid or salts thereof, vinyltrimethoxysilane, and vinyltriethoxysilane.

Examples of the allyl compound monomers include allylsulfonic acid or salts thereof, allylamine, allyl chloride, diallylamine, and diallyldimethylammonium salts.

Examples of the olefin monomers include ethylene, and propylene. Examples of the diene monomers include butadiene, and chloroprene.

Examples of the oligomers having unsaturated carbon atoms include styrene oligomers having methacryloyl groups, styrene-acrylonitrile oligomer having methacryloyl groups, methyl methacrylate oligomers having methacryloyl groups, dimethyl siloxane oligomers having methacryloyl groups, and polyester oligomers having acryloyl groups.

In the presence of a strong alkali or strong acid, the water-dispersible resin may suffer from premature or uncontrolled destabilization and/or swelling and/or breakage of the molecular chains, such as dispersion breakage and hydrolysis, and thus the pH of the water-dispersible resin is preferably 4 to 12, and particularly, from the view point of miscibility with water-dispersible colorants, it is more preferably 6 to 11, and still more preferably 7 to 9.

The water-dispersible resin preferably has a function to fix the water-dispersible colorant on the surface of paper, to form a coat at normal temperature and to improve fixability of coloring material. Therefore, the minimum film forming temperature (MFFT) of the water-dispersible resin is preferably 60°C or lower, more preferably 45°C or lower, even more preferably 30°C or lower. Alternatively, water dispersible resins having a higher MFFT, typically up to 100° C may be used in combination with a plasticizing cosolvent in order to lower the MFFT of the latex composition. Further, if the glass transition temperature of the water-dispersible resin is -40°C or lower, tucks may occur in printed matters because of the increased viscidity of the resin coat. Thus, the water-dispersible resin preferably has a glass transition temperature of -30°C or higher.

The content of the water-dispersible resin added in the ink of the present invention is preferably from 1 - 40 weight% based on the total weight of the ink, and it is more preferably from 1.5 - 30 weight%, and it is still more preferably from 2 - 25 weight%. Even more preferably, the amount of the water-dispersible resin contained in the inkjet ink, as a solid content, is 2.5 weight% to 15 weight%, and more preferably 3 weight% to 7 weight%, relative to the total ink composition.

The average particle diameter (D50) of the water-dispersible resin is preferably from 10 nm - 1 $\mu$m, it is more preferably from 10 - 500 nm, and it is still more preferably from 20 - 200nm, and especially preferably it is from 50 - 200 nm.

When the average particle diameter (D50) is equal to or less than 10 nm, significant effects in improving the image quality or enhancing transfer characteristics of the image cannot be fully expected, even if aggregation occurs.

The average particle diameter (D50) of the water-dispersible resin is relevant to the viscosity of the dispersion liquid. In the case of water-dispersible resins having the same composition, the smaller the particle diameter, the higher is the viscosity at the same solid content. The average particle diameter (D50) of the water-dispersible resin is preferably 50 nm or greater to prevent the resulting ink from having excessively high viscosity.

When the average particle diameter (D50) is equal to or greater than 1 $\mu$m, there may be a possibility that the ejection characteristics of the ink from the inkjet head or the storage stability of the ink will be deteriorated. In order not to impair the ink ejection stability, the average particle diameter (D50) of the water-dispersible resin is preferably 200 nm or smaller, and more preferably 150 nm or smaller.

In addition, there are no specific restrictions to the particle size distribution of the polymer particles, and it is possible that the polymer particles have a broad particle size distribution or the polymer particles have a particle size distribution of monodisperse type.

In an embodiment, the ink composition according to the present invention comprises two or more water-dispersible resins selected from the above cited synthetic resins, synthetic copolymer resins and natural polymer compounds in admixture with each other.

Water-Dispersible Colorant

A water-dispersible colorant may be a pigment or a mixture of pigments, a dye or a mixture of dyes or a mixture comprising pigments and dyes, as long as the colorant is water-dispersible.

In the inkjet ink according to the present invention, a pigment is primarily used as a water-dispersible colorant in view of the weatherability, and, for the purpose of controlling color tone, a dye may be contained within the range not impairing the weatherability. The pigment is not particularly limited and may be suitably selected in accordance with the intended use.

Examples of the pigment usable in the present invention include those commonly known without any limitation, and either a water-dispersible pigment or an oil-dispersible pigment is usable. For example, an organic pigment such as an insoluble pigment or a lake pigment, as well as an inorganic pigment such as carbon black, is preferably usable.

Examples of the insoluble pigments are not particularly limited, but preferred are an azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, or diketopyrrolopyrrole dye.

For example, inorganic pigments and organic pigments for black and color inks are exemplified. These pigments may be used alone or in combination. As the inorganic pigments, it is possible to use carbon blacks produced by a known method such as a contact method, furnace method and thermal method, in addition to titanium oxide, iron oxide, calcium carbonate, barium sulfate, aluminum hydroxide, barium yellow, cadmium red and chrome yellow.

As the organic pigments, it is possible to use azo pigments (including azo lake, insoluble azo pigments, condensed pigments, chelate azo pigments and the like), polycyclic pigments (e.g., phthalocyanine pigments, perylene pigments, perynone pigments, anthraquinone pigments, quinacridone pigments, dioxazine pigments, indigo pigments, thioindigo pigments, isoindolinone pigments, and quinophthalone pigments), dye chelates (e.g., basic dye type chelates, and acidic dye type chelates), nitro pigments, nitroso pigments, aniline black. Among these, particularly, pigments having high affinity with water are preferably used.

Specific pigments which are preferably usable are listed below.

Examples of pigments for magenta or red include: C.I. Pigment Red 1, C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 17, C.I. Pigment Red 22, C.I. Pigment Red 23, C.I. Pigment Red 31, C.I. Pigment Red 38, C.I. Pigment Red 48:1, C.I. Pigment Red 48:2 (Permanent Red 2B(Ca)), C.I. Pigment Red 48:3, C.I. Pigment Red 48:4, C.I. Pigment Red 49:1, C.I. Pigment Red 52:2; C.I. Pigment Red 53:1, C.I. Pigment Red 57:1 (Brilliant Carmine 6B), C.I. Pigment Red 60:1, C.I. Pigment Red 63:1, C.I. Pigment Red 64:1, C.I. Pigment Red 81. C.I. Pigment Red 83, C.I. Pigment Red 88, C.I. Pigment Red 101 (colcothar), C.I. Pigment Red 104, C.I. Pigment Red 106, C.I. Pigment Red 108 (Cadmium Red), C.I. Pigment Red 112, C.I. Pigment Red 114, C.I. Pigment Red 122 (Quinacridone Magenta), C.I. Pigment Red 123, C.I. Pigment Red 139, C.I. Pigment Red 44, C.I. Pigment Red 146, C.I. Pigment Red 149, C.I. Pigment Red 166, C.I. Pigment Red 168, C.I. Pigment Red 170, C.I. Pigment Red 172, C.I. Pigment Red 177, C.I. Pigment Red 178, C.I. Pigment Red 179, C.I. Pigment Red 185, C.I. Pigment Red 190, C.I. Pigment Red 193, C.I. Pigment Red 209, C.I. Pigment Red 219 and C.I. Pigment Red 222, C.I. Pigment Violet 1 (Rhodamine Lake), C.I. Pigment Violet 3, C.I. Pigment Violet 5:1, C.I. Pigment Violet 16, C.I. Pigment Violet 19, C.I. Pigment Violet 23 and C.I. Pigment Violet 38.

Examples of pigments for orange or yellow include: C.I. Pigment Yellow 1, C.I. Pigment Yellow 3, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 24, C.I. Pigment Yellow 34, C.I. Pigment Yellow 35, C.I. Pigment Yellow 37, C.I. Pigment Yellow 42 (yellow iron oxides), C.I. Pigment Yellow 53, C.I. Pigment Yellow 55, C.I. Pigment Yellow 74, C.I. Pigment Yellow 81, C.I. Pigment Yellow 83, C.I. Pigment Yellow 93, C.I. Pigment Yellow 94, C.I. Pigment Yellow 95, C.I. Pigment Yellow 97, C.I. Pigment Yellow 98, C.I. Pigment Yellow 100, C.I. Pigment Yellow 101, C.I. Pigment Yellow 104, C.I. Pigment Yellow 408, C.I. Pigment Yellow 109, C.I. Pigment Yellow 110, C.I. Pigment Yellow 117, C.I. Pigment Yellow 120, C.I. Pigment Yellow 128, C.I. Pigment Yellow 138, C.I. Pigment Yellow 150, C.I. Pigment Yellow 151, C.I. Pigment Yellow 153 and C.I. Pigment Yellow 183; C.I. Pigment Orange 5, C.I. Pigment Orange 13, C.I. Pigment Orange 16, C.I. Pigment Orange 17, C.I. Pigment Orange 31, C.I. Pigment Orange 34, C.I. Pigment Orange 36, C.I. Pigment Orange 43, and C.I. Pigment Orange 51.

Examples of pigments for green or cyan include: C.I. Pigment Blue 1, C.I. Pigment Blue 2, C.I. Pigment Blue 15, C.I. Pigment Blue 15:1, C.I. Pigment Blue 15:2, C.I. Pigment Blue 15:3 (Phthalocyanine Blue), C.I. Pigment Blue 16, C.I. Pigment Blue 17:1, C.I. Pigment Blue 56, C.I. Pigment Blue 60, C.I. Pigment Blue 63, C.I. Pigment Green 1, C.I. Pigment Green 4, C.I. Pigment Green 7, C.I. Pigment Green 8, C.I. Pigment Green 10, C.I. Pigment Green 17, C.I. Pigment Green 18 and C.I. Pigment Green 36.

In addition to the above pigments, when red, green, blue or intermediate colors are required, it is preferable that the following pigments are employed individually or in combination thereof. Examples of employable pigments include: C.I. Pigment Red 209, 224, 177, and 194, C.I. Pigment Orange 43, C.I. Vat Violet 3, C.I. Pigment Violet 19, 23, and 37, C.I. Pigment Green 36, and 7, C.I. Pigment Blue 15:6.

Further, examples of pigments for black include: C.I. Pigment Black 1, C.I. Pigment Black 6, C.I. Pigment Black 7 and C.I. Pigment Black 11. Specific examples of pigments for black color ink usable in the present invention include carbon blacks (e.g., furnace black, lamp black, acetylene black, and channel black); (C.I. Pigment Black 7) or metal-based pigments (e.g., copper, iron (C.I. Pigment Black 11), and titanium oxide; and organic pigments (e.g., aniline black (C.I. Pigment Black 1).

in an embodiment, the colorant contains a polymer emulsion in which a water-insoluble or sparsely soluble coloring material is coated with an anionic polymer resin.

As the water-dispersible pigment according to this embodiment, a polymer emulsion obtained by coating a pigment with an anionic polymer resin is preferably used. The polymer emulsion obtained by coating a pigment with an anionic polymer resin is an emulsion in which a pigment is encapsulated by an anionic polymer resin coating layer, also termed core-and-shell dispersible pigments. Alternatively, a pigment may be adsorbed on the surface of a polymer resin dispersed particle. Examples of suitable anionic polymer resins for use in this embodiment include vinyl polymers, polyester polymers, and polyurethane polymers. For example, the anionic polymers disclosed in Japanese Patent Application Laid-Open (JP-A) Nos. 2000-53897 and 2001- 139849 can be used.

In an embodiment, the colorant contains a pigment having at least one hydrophilic group on its surface and exhibiting water-dispersibility in the absence of dispersants (hereinafter, otherwise referred to as "self-dispersible pigment").

The self-dispersible pigment according to this embodiment is a pigment whose surface has been modified so that at least one hydrophilic group is, directly or via another atom group, combined with the surface of the pigment. To achieve the surface modification, for example, the following methods are employed:

- a method in which a specific functional group (functional group such as a sulfonic group and a carboxylic group) is chemically combined with the surface of a pigment; or
- a method in which the surface of a pigment is subjected to wet oxidization treatment using at least one of a hypohalous acid (e.g. HOCl, HOF, HOI, HOBr) or a salt thereof.

Of these methods, a form is particularly preferable in which a carboxylic group is combined with the surface of a pigment and the pigment is dispersed in water.

Since the surface of a pigment is modified and a carboxylic group is compound with the surface of the pigment, not only the dispersion stability but also higher print quality can be obtained, and the waterfastness of the recording medium after printing is further improved.

As the self-dispersible pigment, a self-dispersible pigment having ionicity (e.g. carbon black) is preferable, and an anionic (i.e. negatively charged) self-dispersible carbon black having an anionic hydrophilic group is particularly preferable.

Examples of the anionic hydrophilic group include -COOM, $-SO_3M$, $-PO_3HM$, $-PO_3M_2$,$-SO_2NH_2$, and $-SO_2NHCOR_d$ (where M represents an alkali metal, ammonium or organic ammonium; and $R_d$ represents an alkyl group having 1 to 12 carbon atoms, a phenyl group that may have a substituent or a naphthyl group that may have a substituent). Among these, -COOM, and $-SO_3M$ are preferably used to be combined with the surface of a color pigment. Here, as "M" in the hydrophilic group, an alkali metal or organic ammonium is used. Examples of the alkali metal include lithium, sodium and potassium. Examples of the organic ammonium include monomethyl ammonium to trimethyl ammonium, monoethyl ammonium to triethyl ammonium, and monomethanol ammonium to trimethanol ammonium.

As a method of obtaining the anionic color pigment, by way of example, as a method of introducing -COONa into the surface of a color pigment, there may be exemplified a method a color pigment is oxidization-treated with a sodium hypochlorous acid; a method of sulfonating the surface of a color pigment; and a method in which a color pigment is reacted with the surface of a color pigment.

The hydrophilic group may be combined with the surface of carbon black via another atom group.

Examples of the another atom group include an alkyl group having 1 to 12 carbon atoms, a phenyl group that may have a substituent or a naphthyl group that may have a substituent. Specific examples of the substituent include $-C_2H_4COOM$ (where M represents an alkali metal or a quaternary ammonium), and $-PhSO_3M$ (where Ph represents a phenyl group,' and M represents an alkali metal or a quaternary ammonium).

The average particle diameter (D50) of the water-dispersible pigment is preferably from 0.01 μm (10 nm) to 0.25 μm (250 nm), more preferably from 20 nm to 200 nm, and it is still more preferably from 40 nm to 150 nm in the inkjet ink in view of the dispersion stability and ejection reliability.

The amount of the water-insoluble pigment contained in the inkjet ink, as a solid content, is preferably 0.5 weight% to 15 weight%, more preferably 0.8 weight% to 10 weight%, and even more preferably between 1 weight% and 6 weight%. When the amount of the water-insoluble pigment is less than 0.5 weight%, the color developing ability and image density of the ink may degrade. When it is more than 15 weight%, unfavorably, the viscosity of the ink is increased, causing a degradation in ink ejection stability.

Solvent

Water is cited as an environmentally friendly and hence desirable solvent. In the present invention, the content of water to the whole ink is preferably from 20 weight% to 80 weight%. It is more preferable that the content of water is from 30 weight% to 75 weight%, even more preferable from 40 weight% to 70 weight%.

Cosolvent

As a solvent of the ink, for the purposes of improving the ejection property of the ink or adjusting the ink physical properties, the ink preferably contains a water soluble organic solvent in addition to water. As long as the effect of the present invention is not damaged, there is no restriction in particular in the type of the water soluble organic solvent.
Examples of the water-soluble organic solvent include polyhydric alcohols, polyhydric alcohol alkyl ethers, polyhydric alcohol aryl ethers, nitrogen-containing heterocyclic compounds, amides, amines, ammonium compounds, sulfur-containing compounds, propylene carbonate, and ethylene carbonate.
Examples of the solvent include: glycerin (also termed glycerol), propylene glycol, dipropylene glycol, tripropylene glycol, tetrapropylene glycol, polypropylene glycol, ethylene glycol, diethylene glycol, triethylene glycol, tetraethylene glycol, polyethylene glycols preferably having a molecular weight of between 200 gram/mol and 1000 gram/mol (e.g. PEG 200, PEG 400, PEG 600, PEG 800, PEG 1000), glycerol ethoxylate, petaerythritol ethoxylate, polyethylene glycol (di)methylethers preferably having a molecular weight of between 200 gram/mol and 1000 gram/mol, tri-methylolpropane, diglycerol (diglycerin), trimethylglycine (betaine), N-methylmorpholine N-oxide, decaglyserol, 1,4-butanediol, 1,3-butanediol, 1,2,6-hexanetriol, 2-pyrrolidinone, dimethylimidazolidinone, ethylene glycol mono-butyl ether, diethylene glycol monomethyl ether, diethylene glycol monoethyl ether, diethylene glycol mono-propyl ether, diethylene glycol mono-butyl ether, triethylene glycol monomethyl ether, triethylene glycol monoethyl ether, triethylene glycol mono-propyl ether, triethylene glycol mono-butyl ether, tetraethylene glycol monomethyl ether, tetraethylene glycol monoethyl ether, propylene glycol mono-butyl ether, dipropylene glycol monomethyl ether, dipropylene glycol monoethyl ether, dipropylene glycol monopropyl ether, diethylene glycol monobutyl ether, tripropylene glycol monomethyl ether, tripropylene glycol monoethyl ether, tripropylene glycol monopropyl ether, tripropylene glycol monobutyl ether, tetrapropylene glycol monomethyl ether, diethylene glycol diethyl ether, diethylene glycol dibutyl ether, triethylene glycol diethyl ether, triethylene glycol dibutyl ether, dipropylene glycol dibutyl ether, tri propylene glycol dibutyl ether, 3-methyl 2,4-pentanediol, diethylene-glycol-monoethyl ether acetate, 1,2-hexanediol, 1,2-pentanediol and 1,2-butanediol.
The water-soluble organic solvents retain a large amount of water therein even when left at rest in the open air, thereby imparting flowability to the ink composition. In this case, by using a water-soluble organic solvent having a high equilibrium water content as the water-soluble organic solvent, it is possible to prevent an excessive increase in viscosity of the ink even when the water in the ink composition evaporates and reaches an equilibrium state.
Examples of a water-soluble organic solvent having a high equilibrium water content include water-soluble organic solvents having an equilibrium water content of 30% by mass or more, more preferably 40% by mass under the environment of 23°C and 80% relative humidity, RH (hereinafter, referred to as "water-soluble organic solvent A"). Note that the term "equilibrium water content" means a water content when a mixture of a water-soluble organic solvent and water is released into the air at a certain temperature and a certain humidity, and the evaporation of water in the solution and absorption of water in the air into the water-soluble organic solvent is in an equilibrium state. More specifically, an equilibrium water content can be measured using a potassium chloride-saturated aqueous solution and a desiccator. The internal temperature of the desiccator is maintained at 23°C ± 1°C and the internal humidity thereof is maintained at 80% ± 3%. Then, each sample of aqueous organic solvents is weighed 1 g and poured in a petri dish, and the petri dish is placed in the desiccator and stored until the time there is no more change in mass of the sample, and an equilibrium water content of the sample can be determined by the following equation, based on the measured amount of water absorbed into organic solvent.

$$\text{Equilibrium Water Content (\%)} = \text{Amount of water absorbed into organic solvent} / (\text{Amount of organic solvent} + \text{Amount of water absorbed into organic solvent}) \times 100$$

As a water-soluble organic solvent A preferably used in the embodiment, polyhydric alcohols having an equilibrium water content of 30% by mass or more under the environment of 23°C and 80% RH are exemplified.
Specific examples of such water-soluble organic solvent A include:

1,2,3-butanetriol (boiling point (bp) 175°C at a pressure of 33 hPa, equilibrium water content (ewc) 38% by mass); 1,2,4-butanetriol (bp 190°C-191°Cat 24 hPa, ewc 41% by mass), glycerin (also termed glycerol) bp 290°C, ewc 49% by mass), diglycerin (bp 270°C at 20 hPa, ewc 38% by mass), triethylene glycol (bp 285°C, ewc 39% by mass),

tetraethylene glycol (bp 324°C-330°C, ewc 37% by mass), diethylene glycol (bp 245°C, ewc 43% by mass), and 1,3-butanediol (bp 203°C - 204°C, ewc 35% by mass).

Among these, glycerin and 1,3-butanediol are particularly preferably used because when these materials contain water, the viscosity of these substances decreases, and the pigment dispersion can be stably maintained without aggregation. It is desirable to use the water-soluble organic solvent A in an amount of 30 weight% or more, preferably 40 weight% or more, more preferably 50 weight% or more relative to the total amount of the water-soluble organic solvents used, because the ejection stability can be secured, and the resulting ink is excellent in preventing adhesion of waste ink to instruments used to maintain the ink ejection apparatus.

The ink composition may comprise a water-soluble organic solvent having an equilibrium water content less than 30% by mass under the environment of 23°C and 80% RH (hereinafter, called "water-soluble organic solvent B"), instead of a part of or in addition to the water-soluble organic solvent A.

Examples of the water-soluble organic solvent B include polyhydric alcohols, polyhydric alcohol alkyl ethers, polyhydric alcohol aryl ethers, nitrogen-containing heterocyclic compounds, amides, amines, sulfur-containing compounds, propylene carbonate, ethylene carbonate, and other water-soluble organic solvents.

Specific examples of the polyhydric alcohols include dipropylene glycol (bp 232°C), 1,5-pentanediol (bp 242°C), 3-methyl-1,3-butanediol (bp 203°C), propylene glycol (bp 187°C), 2-methyl-2,4-pentanediol (bp 197°C), ethylene glycol (bp 196°C-198°C), tripropylene glycol (bp 267°C), hexylene glycol (bp 197°C), polyethylene glycol (viscosity-controlled liquid to solid), polypropylene glycol (bp 187°C), 1,6-hexanediol (bp 253°C-260°C), 1,2,6-hexanetriol (bp 178°C), trimethylolethane (solid, melting point (mp) 199°C-201°C), and trimethylolpropane (solid, mp 61 °C).

Examples of the polyhydric alcohol alkyl ethers include ethylene glycol monoethylether (bp 135°C), ethylene glycol monobutylether (bp 171°C), diethylene glycol monomethylether (bp 194°C), diethylene glycol monoethylether (bp 197°C), diethylene glycol monobutylether (bp 231 °C), ethylene glycol mono-2-ethylhexylether (bp 229°C), and propylene glycol monoethylether (bp 132°C).

Examples of the polyhydric alcohol aryl ethers include ethylene glycol monophenyl ether (bp 237°C), and ethylene glycol monobenzyl ether.

Examples of the nitrogen-containing heterocyclic compounds include 2-pyrrolidone (bp 250°C, mp 25.5°C, ewc 47% by mass-48% by mass), N-methyl-2-pyrrolidone (bp 202°C),
1,3-dimethyl-2-imidazolidionone (bp226°C), ε-caprolactam (bp 270°C), and γ-butyrolactone (bp 204°C-205°C).

Examples of the amides include formamide (bp 210°C), N-methylformamide (bp 199°C-201°C), N,N-dimethylformamide (bp 153°C), and N,N-diethylformamide (bp 176°C-177°C).

Examples of the amines include monoethanolamine (bp 170°C), dimethanolamine (bp 268°C), triethanolamine (bp 360°C), N,N-dimethylmonoethanolamine (bp 139°C), N-methyldiethanolamine (bp 243°C), N-methylethanolamine (bp 159°C), N-phenylethanolamine (bp 282°C-287°C), 3-aminopropyl diethylamine (bp 169°C), N-ethyldiethanolamine, N,N-diethylmonoethanolamine, tripropanolamine, 2-amino-2-methyl-1-propanol, N-ethyl-monoethanolamine, N,N-di-n-butylmonoethanolamine, diisopropanolamine, N-n-butylmonoethanolamine, N-n-butyldiethanolamine and diglycolamine.

Examples of the sulfur-containing compounds include dimethylsulfoxide (bp 139°C), sulfolane (bp 285°C), and thiodiglycol (bp 282°C).

As other solid water-soluble organic solvents, saccharides are preferable. Examples of the saccharides include monosaccharides, disaccharides, oligosaccharides (including triaccharides and tetrasaccharide), and polysaccharides.

Specific examples thereof include glucose, mannose, fructose, ribose, xylose, arabinose, galactose, maltose, cellobiose, lactose, sucrose, trehalose, and maltotriose. Here, the above-mentioned polysaccharides mean broad sense-saccharides, which may include substances existing widely in nature, such as orcyclodextrin and cellulose. Derivatives of these saccharides include reducing sugars of saccharides (for example, sugar alcohol, which is expressed by the general formula: $HOCH_2(CHOH)_nCH_2OH$, wherein n is an integer of 2 to 5), oxidized sugars (for example, aldonic acids and uronic acids), amino acids, and thio acids. Among these, sugar alcohol is preferable. Specific examples of sugar alcohol include maltitol and sorbitol.

In an embodiment, a mixture of the water-soluble organic solvents may be comprised in an ink composition according to the present invention. The individual organic solvents preferably being present in an amount of 1 weight% to 50 weight%, more preferably in an amount of 1 weight% to 40 weight%, even more preferably in an amount of 1 weight% to 25 weight%, relative to the total ink composition.

In an embodiment, the mixture of water-soluble organic solvents comprised in the ink composition may be used to optimize the stability (reliability) of an ink composition comprising such a mixture of water-soluble organic solvents and to improve print quality, e.g. solve or at least mitigate problems such as streakiness and/or coalescence and/or puddling and/or dewetting, in particular on apolar media, which are bound to surface tension-related driving forces occurring during the spreading of an ink droplet onto the media or during the drying of the ink.

Such a mixture may comprise a first water-soluble organic solvent having a first relative dielectric constant and a second water-soluble organic solvent having a second relative dielectric constant, wherein the difference between the first

relative dielectric constant and the second dielectric constant is more than 5, preferably more than 8, more preferably between 10 and 50, more preferably between 15 and 40.

In the context of the present invention the relative dielectric constant (i.e. relative to the dielectric constant of vacuum, $\varepsilon_0 \approx 8.85 \times 10^{-12}$ C/(V*m)) of the water-soluble organic solvents is a measure for their polarity. Therefore, by selecting the first water-soluble organic solvent and the second water-soluble organic solvent in accordance with the above mentioned criterion, the first and the second water-soluble organic cosolvent differ in polarity. Both the first and the second water-soluble organic solvent may be selected from any of the water-soluble organic solvents described above, as long as the difference between the relative dielectric constants of the first water-soluble organic solvent and the second water-soluble organic solvent is more than 5, as described above. Preferably both water-soluble organic solvents are selected from the group consisting of glycerol (relative dielectric constant, $\varepsilon_r$ = 42.5); propylene glycol (1,2-propanediol, $\varepsilon_r$ = 32.1); diethylene glycol ($\varepsilon_r$ = 31.82); 1,2-pentanediol ($\varepsilon_r$ = 17.31); 1,4-pentanediol ($\varepsilon_r$ = 26.74); 1,5-pentanediol ($\varepsilon_r$ = 26.2); 2,3-pentanediol ($\varepsilon_r$ = 17.37); 2,4-pentanediol ($\varepsilon_r$ = 24.69); ethylene glycol diacetate ($\varepsilon_r$ = 7.7); hexylene glycol ($\varepsilon_r$ = 23.4); triethylene glycol, PEG400 ($\varepsilon_r$ = 12.4), PEG600 ($\varepsilon_r$ = 12.7), ($\varepsilon_r$ = 23.69), triethylene glycol dimethylether ($\varepsilon_r$ = 7.62); butyl phenylether ($\varepsilon_r$ = 3.73); bis(2-methoxyethyl)ether ($\varepsilon_r$ = 7.23); bis(2-hydroxypropyl)ether ($\varepsilon_r$ = 20.38); dipentylether ($\varepsilon_r$ = 2.80); bis(3-methylbutyl)ether ($\varepsilon_r$ = 2.82); tetraethylene glycol dimethylether ($\varepsilon_r$ = 7.68); pentaethylene glycol ($\varepsilon_r$ = 18.16); benzylphenylether ($\varepsilon_r$ = 3.75); dibenzylether ($\varepsilon_r$ = 3.82); tetraethylene glycol dibutylether ($\varepsilon_r$ = 5.15); didecylether ($\varepsilon_r$ = 2.64); octadecoxyethanol ($\varepsilon_r$ = 3.56); tetraethyleneglycol ($\varepsilon_r$, = 20.44); 2-butoxyethanol ($\varepsilon_r$ = 9.43); propylene glycol methylether (e.g. commercially available as DOWANOL™ PM; $\varepsilon_r$ = 11.97); dipropylene glycol methylether (e.g. DOWANOL DPM, $\varepsilon_r$ = 10.44); propylene glycol methylether acetate (e.g. DOWANOL PMA, $\varepsilon_r$ = 8.04); propylene glycol n-propylether (e.g. DOWANOL PnP, $\varepsilon_r$ = 8.82); dipropylene glycol n-propylether (e.g. DOWANOL DPnP, $\varepsilon_r$ = 8.48); propylene glycol n-butylether (e.g. DOWANOL PnB, $\varepsilon_r$ = 7.97), dipropylene glycol n-butylether (e.g. DOWANOL DPnB, $\varepsilon_r$ = 7.76); triethylene glycol monomethylether (methoxytriglycol (DOW), $\varepsilon_r$ = 13.33); diethylene glycol monoethylether (e.g. CARBITOL™ Solvent (LG) (DOW), $\varepsilon_r$ = 13.01); diethylene glycol monomethylether (e.g. Methyl CARBITOL Solvent (DOW), $\varepsilon_r$ = 14.81); diethylene glycol monobutylether (e.g. Butyl CARBITOL (DOW), $\varepsilon_r$ 10.15); diethylene glycol monohexylether (e.g. Hexyl CARBITOL (DOW), $\varepsilon_r$ = 8.72); diethylene glycol n-butyletheracetate (e.g. Butyl CARBITOL Acetate (DOW), $\varepsilon_r$ = 6.95); ethylene glycol monopropylether (e.g. Propyl CELLOSOLVE™ Solvent (DOW), $\varepsilon_r$ = 10.93); ethylene glycol monobutylether (e.g. Butyl CELLOSOLVE (DOW), $\varepsilon_r$ = 9.36); ethylene glycol monohexylether (e.g. Hexyl CELLOSOLVE (DOW), $\varepsilon_r$ = 7.38); ethylene glycol n-butyletheracetate (e.g. Butyl CELLOSOLVE Acetate (DOW), $\varepsilon_r$ = 6.57); triethylene glycol monoethylether (ethoxytriglycol (DOW), $\varepsilon_r$ = 11.91); triethylene glycol monobutylether (butoxytriglycol (DOW), $\varepsilon_r$ = 9.64); ethyl 3-ethoxypropionate (e.g. UCAR™ Ester EEP (DOW), $\varepsilon_r$ = 5.84).

The addition of a water-soluble organic solvent having a dielectric constant of below 25, preferably below 20, more preferably below 15 to the ink composition improves the drop spreading of the ink on apolar substrates, in particular on machine coated or offset coated media, increasing the spreading factor (i.e. dotgain) and reduces the streakiness. After spreading of the ink droplet, the surface tension of the ink should preferably be kept low to avoid dewetting. However, the use of a water-soluble organic solvent having a low dielectric constant (an apolar solvent) is not favorable for the stability of the resin dispersion (latex) and/or pigment dispersion. Destabilization of the pigment and/or of the resin dispersions may induce coagulation in the imaging device (e.g. (inkjet) printhead) and hence nozzle clogging may occur, leading to nozzle failure and as consequence unreliability of the imaging device. The mixture of water-soluble organic solvents as described above comprises polar (i.e. having relatively high dielectric constants) and apolar (i.e. having relatively low dielectric constants) cosolvents wherein the polar cosolvents provide stability of the pigment and/or of the resin dispersions, and hence reliability of the imaging device. The apolar cosolvents provide an improvement of the spreading behavior of an ink droplet on a substrate, in particular machine coated or offset coated media, and hence an improvement of the print quality.

In an embodiment, the ink composition comprises at least one oligomeric or polymeric cosolvent, in particular at least one selected from the group consisting of polyethylene glycols and polyethylene glycol (di)methyl ethers as defined above. An additional advantage of such cosolvents is that they provide a viscosity increase to printed ink drops upon drying (due to evaporation of water). Such a viscosity increase prevents a spreading ink drop from coalescing with neighboring ink drops.

Print artifacts such as puddling and dewetting are prevented or at least mitigated by using such oligomeric and/or polymeric cosolvents in the ink composition. An additional advantage of this embodiment is that media curling is effectively reduced.

Oligomeric and polymeric cosolvents are preferably present in an amount of between 0 weight% and 30 weight%, more preferably between 2 weight% and 27 weight% and even more preferably between 5 weight% and 25 weight%.

The total amount of the water-soluble organic solvent contained in the ink composition is not particularly limited. It is, however, preferably 0 weight% to 75 weight%, and more preferably 10 weight% to 70 weight%, and even more preferably 15 weight% to 60 weight% with respect to the total ink composition. When the amount of the water-soluble organic solvent is more than 80 weight%, the drying times of the ink compositions are too long. When the amount is less than 10 weight%, water in the ink compositions may evaporate more quickly, which may significantly reduce the

stability of the ink composition.

A mass ratio of the water-dispersible colorant to the water-soluble organic solvent in the inkjet ink affects the ejection stability of ink ejected from an inkjet head. For example, when the addition amount of the water-soluble organic solvent is low regardless of high solid content of the water-dispersible colorant, evaporation of water near the ink meniscus of nozzles proceeds, and ejection defects may be caused. The total amount of the water-soluble organic solvent contained in the inkjet ink is preferably 20 weight% to 50 weight%, and more preferably 20 weight% to 45 weight%. When amount of the water-soluble organic solvent is less than 20 weight%, the ejection stability may degrade and waste ink may adhere to instruments used to maintain the ink ejection apparatus. In contrast, when the amount of the water-soluble organic solvent is more than 50 weight%, the dryness of ink printed on paper may degrade, and further the quality of characters printed on regular paper may degrade.

In an embodiment, an amino alcohol, in particular a N-alkyl-dialkanolamine, is used as a cosolvent in a small amount, i.e. less than 3 weight%, preferably less then 2 weight%, more preferably around 0.5 weight% with respect to the total ink composition. In such an ink formulation, the total fraction of stabilizing cosolvents can be significantly reduced (e.g. from 40 weight% to between 20 weight% and 30 weight%) without compromising the ink stability (in the inkjet head) and spreading properties on a receiving medium.

An ink composition according to the present embodiment preferably comprises a total amount of cosolvents of between 0 weight% and 40 weight%, preferably between 10 weight% and 35 weight%, more preferably between 20 weight% and 30 weight%. Examples of suitable amino alcohols are: triethanolamine, N-metyldiethanolamine, N-ethyldiethanolamine, N-n-butyl-monoethanolamine and N-n-butyl-diethanolamine.

Surfactants

It is preferable that the ink of the present invention contains a surfactant in order to improve an ink ejection property and/or the wettability of the surface of a recording medium, and the image density and color saturation of the image formed and reducing white spots therein. To improve the spreading of the ink on the surface of recording medium and to reduce puddling, it is preferable to adjust the dynamic surface tension (measured at 10 Hz) of the ink composition to 35 mN/m or lower, preferably to 34 nN/m or lower, more preferably to 33 mN/m or lower, even more preferably to 32 mN/m or lower by the surfactant. The static surface tension of the ink composition is preferably below 30 mN/m (measured at 0.1 Hz).

Examples of surfactants are not specifically limited. The following can be cited.

Examples of the surfactant include nonionic surfactants, cationic surfactants, anionic surfactants, amphoteric surfactants, in particular betaine surfactants, silicone surfactants, and fluorochemical surfactants. Particularly, at least one selected from acetylene surfactants, silicone surfactants and fluorochemical surfactants capable of reducing the surface tension to 30 mN/m or lower is preferably used.

Examples of a cationic surfactant include: aliphatic amine salts, aliphatic quarternary ammonium salts, benzalkonium salts, benzethonium chloride, pyridinium salts, imidazolinium salts.

Examples of an anionic surfactant include: polyoxyethylene alkylether acetic acid salts, dodecylbenzene sulfonic acid salts, lauric acid salts, and salts of polyoxyethylene alkylether sulfate, an aliphatic acid soap, an N-acyl-N-methyl glycin salt, an N-acyl-N-methyl-β-alanine salt, an N-acylglutamate, an acylated peptide, an alkylsulfonic acid salt, an alkylbezenesulfonic acid salt, an alkylnaphthalenesulfonic acid salt, a dialkylsulfo succinate (e.g. sodium dioctyl sulfosuccinate (DSS); alternative names: docusate sodium, Aerosol OT and AOT), alkylsulfo acetate, α-olefin sulfonate, N-acylmethyl taurine, a sulfonated oil, a higher alcohol sulfate salt, a secondary higher alcohol sulfate salt, an alkyl ether sulfate, a secondary higher alcohol ethoxysulfate, a polyoxyethylene alkylphenyl ether sulfate, a monoglysulfate, an aliphatic acid alkylolamido sulfate salt, an alkyl ether phosphate salt and an alkyl phosphate salt. Examples of an amphoteric surfactant include: a carboxybetaine type, a sulfobetaine type, an aminocarboxylate salt and an imidazolium betaine.

Examples of a nonionic surfactant include: polyoxyethylene alkylether, polyoxypropylene polyoxyethylene alkylether, a polyoxyethylene secondary alcohol ether, a polyoxyethylene alkylphenyl ether, a polyoxyethylene sterol ether, a polyoxyethylenelanolin derivative polyoxyethylene polyoxypropylene alkyl ether, polyoxyethylene alkylester, a polyoxyethyleneglycerine aliphatic acid ester, a polyoxyethylene castor oil, a hydrogenated castor oil, a polyoxyethylene sorbitol aliphatic acid ester, a polyethylene glycols aliphatic acid ester, an aliphatic acid monoglyceride, a polyglycerine aliphatic acid ester, a sorbitan aliphatic acid ester, polyoxyethylene sorbitan aliphatic ester, a propylene glycol aliphatic acid ester, a cane sugar aliphatic acid ester, an aliphatic acid alkanol amide, polyoxyethylene alkylamide, a polyoxyethylene aliphatic acid amide, a polyoxyethylene alkylamine, an alkylamine oxide, an acetyleneglycol, an ethoxylated acetylene glycol, acetylene alcohol.

It is preferable that a part of these surfactants is furthermore substituted wit a fluorine atom or a silicon atom from a viewpoint of reducing the surface tension.

As the fluorochemical surfactant, a surfactant having 2 to 16 fluorine-substituted carbon atoms is preferred,

and a surfactant having 4 to 16 fluorine-substituted carbon atoms is more preferred. When the number of fluorine-substituted carbon atoms is less than 2, the effect peculiar to a fluorochemical surfactant may not be obtained. When it is more than 16, degradation in storage stability etc. may arise.

Examples of the fluorochemical surfactants include nonionic fluorochemical surfactants, anionic fluorochemical surfactants, and amphoteric fluorochemical surfactants. Examples of the nonionic fluorochemical surfactants include perfluoroalkyl phosphoric acid ester compounds, perfluoroalkyl ethylene oxide adducts, and polyoxyalkylene ether polymer compounds having perfluoroalkyl ether groups as side chains. Among these, polyoxyalkylene ether polymer compounds having perfluoroalkyl ether groups as side chains are preferable because they are low in foaming property.

As the fluorochemical surfactants, commercially available products may be used. Examples of the commercially available products include SURFLON S-HI, S-112, S-113. S-121, S-131, S-132, S-141 and S-145 (all of which are produced by Asahi Glass Co., Ltd.), FLUORAD FC-93, FC-95, FC-98, FC-129, FC-135, FC-170C, FC-430 and FC-431 (all of which are produced by Sumitomo 3M Limited), MEGAFAC F-470, F-1405 and F-474 (all of which are produced by Dainippon Ink Chemical Industries Co., Ltd.), ZONYL TBS, FSP, FSA, FSN-100, FSN, FSO-100, FSO, FS-300 and UR (all of which are produced by E. I. du Pont de Nemours and Company), FT-110, FT-250, FT-251, FT-400S, FT- 150 and FT-400SW (all of which are produced by Neos Company Limited), and POLYFOX PF-136A, PF-156A, PF-151N, PF-154, and PF-159 (all of which are produced by OMNOVA Solutions Inc.). Among these, ZONYL FS-300 (produced by E. I. du Pont de Nemours and Company), FT-110, FT-250, FT-251, FT-400S, FT-150, FT-400SW (produced by Neos Company Limited), and POLYFOX PF-151N (produced by OMNOVA Solutions Inc.) are preferable in that they are excellent in print quality, particularly in color developing ability and in dye-leveling property.

The silicone surfactant is not particularly limited and may be suitably selected in accordance with the intended use.

Examples of the silicone surfactant include side-chain-modified polydimethylsiloxane, both-ends-modified polydimethylsiloxane, one-end-modified polydimethylsiloxane, and side-chain/both-ends-modified polydimethylsiloxane. Polyether-modified silicone surfactants having, as a modified group, a polyoxyethylene group or a polyoxyethylene polyoxypropylene group are particularly preferable because they exhibit excellent physical properties as water-based surfactants. The silicone surfactant may be suitably synthesized or commercial products may be used. The commercial product is readily available from BYK Chemie GmbH, Shin-Etsu Chemical Co., Ltd., TORAY Dow Corning Silicone Co., Ltd., Nihon Emulsion Co., Ltd., Kyoeisha Chemical Co., Ltd., or the like.

The polyether-modified silicone surfactant is not particularly limited and may be suitably selected in accordance with the intended use. Examples thereof include a compound in which a polyalkylene oxide structure represented by Formula 1 is induced in Si portion side chain of dimethyl polysiloxane.

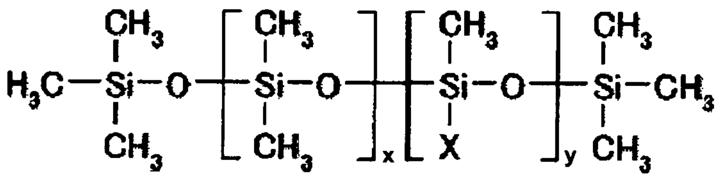

Formula 1

wherein X = $-R(C_2H_4O)_a(C_3H_6O)_bR'$

In Formula 1, x, y, a and b are each an integer; R represents an alkyl group, and R' represents an alkylene group.

As the polyether-modified silicone surfactant, commercial products may be used.

Examples of the commercial products include KF-618, KF-642 and KF-643 (produced by Shin-Etsu Chemical Co., Ltd.); EMALEX-SS-5602 and SS- 1906EX (produced by Nihon Emulsion Co., Ltd.); FZ-2105, FZ-2118, FZ-2154, FZ-2161, FZ-2162, FZ-2163 and FZ-2164 (produced by TORAY Dow Corning Silicone Co., Ltd.); and BYK-33, BYK 331, BYK 341, BYK 348, BYK 349, BYK 3455, BYK-387 (produced by BYK Chemie GmbH); Tegowet 240, Tegowet 245, Tegowet 250, Tegowet 260 (produced by Evonik); Silwet L-77 (produced by Sabic).

All surfactants mentioned in this section may be used solely, or they may be used in combination of the plural.

It has surprisingly been found that the dynamic surface tension measured at a frequency of 10 Hz (i.e. contact times of 0.1 s) correlates very well with dotgain (i.e. diameter of printed dot on medium / diameter of droplet of ink in air), see Fig. 1.

In an embodiment, a surfactant may be selected from the group consisting of dialkyl sulfosucinate salts, such as sodium dioctyl sulfosuccinate (AOT), ethoxylated acetylene glycols like Dynol 607 (Air Products) and combinations thereof. These surfactants are capable of reducing the dynamic surface tension of an aqueous latex ink composition according to the present invention to below 35 mN/m sodium dioctyl sulfosuccinate (AOT) can give a very low dynamic surface tension at 10 Hz (below 30 mN/m). However, when used in higher amounts, the print quality may be compromised due to dewetting. An alternative is an ethoxylated acetylene glycol like Dynol 607.

Ethoxylated acetylene glycols have a general structure as shown in Formula 2.

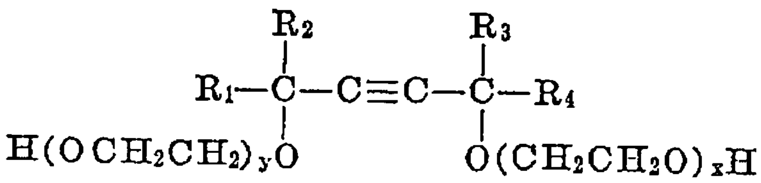

Formula 2

Wherein $R_1$ and $R_4$ are the same or different alkyl radicals having from 3-10, preferably from 3-6 carbon atoms, preferably $R_1$ and $R_4$ are the same and $R_2$ and $R_3$ are the same or different and selected from methyl and ethyl, preferably both $R_2$ and $R_3$ are methyl and x and y are both integers and have a sum in the range of between 1 and 60.

Specific examples of ethoxylated acetylene glycols are ethoxylated 3-methyl-1-nonyn-3-ol, ethoxylated 7,10-dimethyl-8-hexadecyne-7,10-diol, ethoxylated 4,7-dimethyl-5-decyne-4,7-diol, ethoxylated 2,4,7,9-tetramethyl-5-decyne-4,7-diol, and ethoxylated 2,5,8,11-tetramethyl-6-dodecyne-5,8-diol. These can be used in combination with each other.

In an embodiment, an ethoxylated acetylene glycol according to Formula 2 is used as a surfactant alone or in combination with other surfactants in an ink composition according to the present invention, wherein x and y are independent of one another and each are in a range of between 0 and 25, preferably between 0 and 20, more preferably between 0 and 15, with the proviso that at least one of x and y is larger the 0.

In general, ethoxylated acetylene glycols are polymers and have a mass distribution because the polyethoxy side chains may vary in length (x and/or y may vary) and/or only one alcohol group of the acetylene glycols has been substituted with a polyethoxy side chain (i.e. x = 0 or y = 0).

In an embodiment, the number average molar weight ($M_n$) of the ethoxylated acetylene glycols used as a surfactant in an ink composition according to the present invention lies in a range of between 300 g/mol and 800 gr/mol, preferably between 350 gr/mol and 700 gr/mol, more preferably between 400 gr/mol and 600 gr/mol.

In an embodiment, the weight average molar weight ($M_w$) of the ethoxylated acetylene glycols used as a surfactant in an ink composition according to the present invention lies in a range of between 350 g/mol and 850 gr/mol, preferably between 400 gr/mol and 750 gr/mol, more preferably between 450 gr/mol and 650 gr/mol

In an embodiment, the polydispersity factor ($D = M_w/M_n$) of the ethoxylated acetylene glycols used as a surfactant in an ink composition according to the present invention lies in a range of between 1 and 2, preferably between 1 and 1.5, more preferably between 1 and 1.2.

In an embodiment, the number average of the sum of x and y lies in the range of between 2 and 15, preferably between 3 and 12, and even more preferably between 6 and 10. The number average of the sum of x and y may be calculated according to equation 1.

$$\overline{x+y} = \frac{M_n - M_{acetylene\,glycol}}{M_{ethoxy}} \qquad \text{equation 1}$$

wherein:

$\overline{x+y}$ is the number average of the sum of x and y;
$M_n$ is the number average molar weight of an ethoxylated acetylene glycol surfactant;
$M_{acetylene}$ glycol is the molar weight of the acetylene glycol (e.g. for 2,4,7,9-tetramethyl-5-decyne-4,7-diol 224 gr/mol and for 2,5,8,11-tetramethyl-6-dodecyne-5,8-diol 254 gr/mol); and
$M_{ethoxy}$ is the molar weight of an ethoxy unit, which is 44 gr/mol.

In an embodiment, the number average molar weight of the combined ethoxy side chains $M_{n,ethoxy}$ (see x and y in Formula 2) lies in a range of between 100 gr/mol and 500 gr/mol, preferably between 150 gr/mol and 400 gr/mol, more preferably between 200 and 350 gr/mol.

In an embodiment, the weight average molar weight of the combined ethoxy side chains $M_{w,ethoxy}$ lies in a range of between 150 gr/mol and 700 gr/mol, preferably between 200 gr/mol and 600 gr/mol, more preferably between 250 and 500 gr/mol.

Structural properties of commercially available ethoxylated acetylene glycol surfactants are shown in Table 1. $M_w$ is the weight average molar weight of the surfactant and D is the polydispersity factor of the surfactant (i.e. $M_{wt}/M_n$)

In an embodiment, an ethoxylated dodecyne is used as a surfactant alone or in combination with other surfactants in an ink composition according to the present invention. Inventors have found that such surfactants are extremely suitable regarding the purpose of the present invention.

*Table 1 structural properties of ethoxylated acetylene glycol surfactants*

| | Surfynol 440 | Dynol 604 | Dynol 607 |
|---|---|---|---|
| Acetylene glycol | 2,4,7,9-tetramethyl-5-decyne-4,7-diol) | 2,5,8,11-tetramethyl-6-dodecyne-5,8-diol | 2,5,8,11-tetramethyl-6-dodecyne-5,8-diol |
| $M_n$ 1) (gr/mol) | 440 | 490 | 590 |
| $M_w$ 1) (gr/mol) | 470 | 520 | 630 |
| D 1) (-) | 1.07 | 1.06 | 1.07 |
| $M_{n,ethoxy}$ 2) (gr/mol) | 216 | 236 | 336 |
| $M_{w,ethoxy}$ 2) (gr/mol) | 277 | 298 | 406 |
| $\overline{x+y}$ 2) | 4.9 | 5.4 | 7.6 |
| $\overline{x+y}$ NMR 3) | 3.8 | 4.2 | 7.2 |
| $\overline{x+y}$ 4) (range) | 2-11 | 2-10 | 3-11 |
| $\overline{x+y}$ 4) (mostly present) | 4 | 4-5 | 5-6 |
| 1) determined with SEC (method see experimental part)<br>2) calculated from SEC data (method see experimental part)<br>3) determined with NMR (method see experimental part)<br>4) determined with LC-MS (method see experimental part) | | | |

A suitable example of an ethoxylated dodecyne is ethoxylated 2,5,8,11-tetramethyl-6-dodecyne-5,8-diol, being represented by Formula 3 and commercially available under the tradename Dynol™ (Air Products), for example Dynol 604 and Dynol 607.

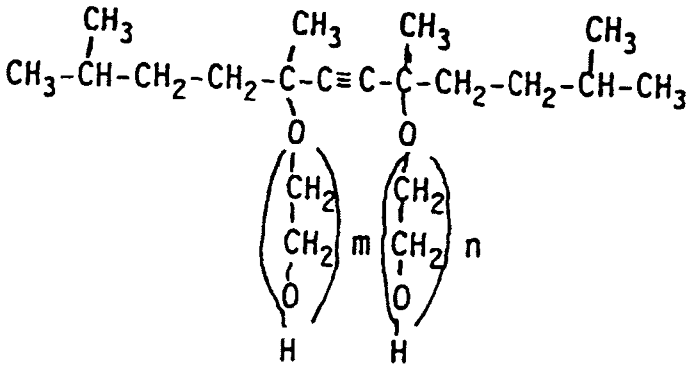

Formula 3

Wherein m and n are integers and the sum is from 2-50, preferably 4-10. Structural properties of Dynol 604 and Dynol 607 are shown in Table 1. With reference to Formula 2 and Formula 3, x and y in Table 1 refer to m and n, respectively, in Formula 3.

Inventors have surprisingly found that using a mixture of surfactants in an ink composition according to the present invention both dotgain and dewetting can be optimized on a wide range of media, including machine coated or offset coated media. Therefore inks according to the present invention comprise a mixture of surfactants, the mixture comprising at least two surfactants suitably selected from the surfactants disclosed here above.

In an embodiment, the mixture of surfactants comprises at least two surfactants selected from the group:

- Dialkyl sulfonosuccinate salts, such as sodium dioctyl sulfosuccinate (AOT);
- Silicone surfactants, such as ethoxylated siloxanes like BYK 348, BYK 349 (BYK), Silwet L-77 (Sabic, Tegowet 240 (Evonik);
- Ethoxylated acetylene glycols like Dynol 607 (Air Products)

The mixture of surfactants as used in the ink compositions of the present invention provide a dynamic surface tension of the ink compositions of below 35 mN/m and the static surface tension above 21 mN/m.

In an embodiment, the ink composition comprises a mixture of cosolvents comprising a polar and an apolar cosolvent as described above and a mixture of surfactants suitably selected to maintain a low surface tension during drying of the printed ink dots, thus preventing or at least mitigating puddling and/or dewetting.
Without wanting to be bound to any theory it is believed that puddling and/or dewetting may occur due to a changing difference between the surface tension of the ink and the surface tension of the medium. On the one hand, the concentrations of the cosolvents and the surfactants increase during drying of the printed ink dots because the evaporation of water On the other hand, the concentration of the cosolvents and the surfactants may decrease due to (partial) absorption of the cosolvents and/or the surfactants (together with water) into the medium. Absorption may therefore partly counteract the concentration increase due to evaporation of water. However, in general, and in particular on poorly (water) absorbing media (such as MC-coated media), evaporation of water prevails over absorption. Therefore the concentrations of cosolvents and/or surfactants will increase during drying and the surface tension of the ink may be largely determined by the present cosolvents and/or surfactants. A portion of the surfactant may also adhere to the surface of the medium which may result in a change of the surface tension of both the medium and the ink, thus influencing the difference between the surface tension of the ink and the surface tension of the medium.
Generally apolar cosolvents have a low surface tension, while polar cosolvents have a relative high surface tension. Surfactants selected to reduce the surface tension of the ink compositions according to the present invention, are usually capable of reducing the surface tension of an aqueous system. Upon drying of printed ink dots, the aqueous ink system however more and more turns into an organic solvent system. Said selected surfactants are less suitable for reducing the surface tension of an organic solvent system. Therefore, upon drying the surface tension of the printed ink dots increases, increasing the risk of puddling and dewetting. The mixture of surfactants according to this embodiment comprises a first surfactant that is capable of reducing the surface tension (static and dynamic) of the total ink composition, being a surfactant that works well with water. In the context of the present invention the first surfactant comprises a surfactant of the first type and/or of the third type. The mixture of surfactants according to this embodiment comprises a second surfactant that is capable of reducing the surface tension of the drying ink composition, being a surfactant that works well with the polar cosolvent. In the context of the present invention the second surfactant comprises a surfactant of the second type.

In an embodiment, the first surfactant of the mixture of surfactants is selected from the group consisting of dialkyl sulfosuccinate salts (surfactant of the third type), such as sodium dioctyl sulfosuccinate (AOT) and an ethoxylated acetylene glycol (surfactant of the first type), such as ethoxylated 2,4,7,9-tetramethyl-5-decyne-4,7-diol and ethoxylated 2,5,8,11-tetramethyl-6-dodecyne-5,8-diol (Dynol™) or a combination thereof.

In an embodiment, the first surfactant of the mixture of surfactants is selected from the group consisting of dialkyl sulfosuccinate salts (surfactant of the third type) and ethoxylated dodecynes (surfactant of the second type) or a combination of both.

In an embodiment, the first surfactant is selected from sodium dioctyl sulfosuccinate (AOT; surfactant of the third type) and ethoxylated 2,5,8,11-tetramethyl-6-dodecyne-5,8-diol (surfactant of the second type), being Dynol 607 or a combination of both.

In an embodiment, the second surfactant is a silicone surfactant (surfactant of the second type), in particular an ethoxylated siloxane surfactant, having a general formula as shown in Formula 4.

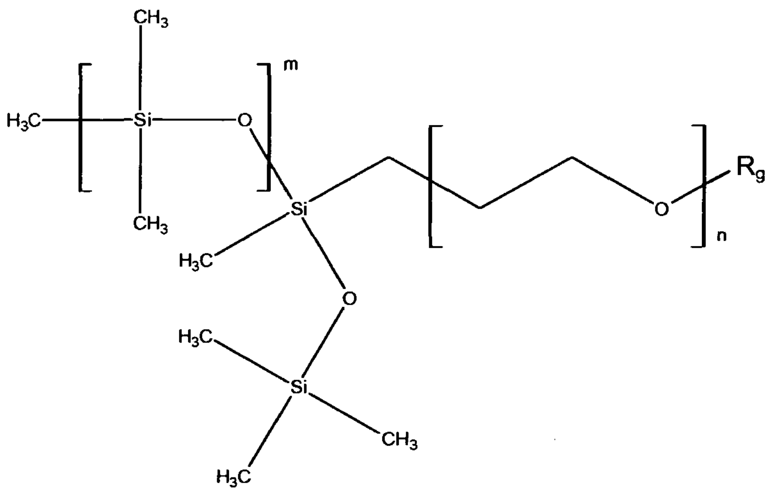

Formula 4

wherein m is an integer ranging from 1-25, preferably from 1-20, more preferably from 2-15 and wherein n is an integer ranging from 1-10, preferably from 1-8, more preferably from 1-5.

In an embodiment, the number average molar weight ($M_n$) of the ethoxylated siloxane used as a surfactant in an ink composition according to the present invention lies in a range of between 300 g/mol and 1000 gr/mol, preferably between 350 gr/mol and 950 gr/mol, more preferably between 450 gr/mol and 850 gr/mol.

In an embodiment, the weight average molar weight ($M_w$) of the ethoxylated siloxane used as a surfactant in an ink composition according to the present invention lies in a range of between 600 g/mol and 1600 gr/mol, preferably between 700 gr/mol and 1500 gr/mol, more preferably between 800 gr/mol and 1400 gr/mol

In an embodiment, the polydispersity factor ($D = M_w/M_n$) of the ethoxylated siloxane used as a surfactant in an ink composition according to the present invention lies in a range of between 1 and 2, preferably between 1 and 1.95, more preferably between 1.3 and 1.9.

In an embodiment, the second surfactant is an ethoxylated siloxane surfactant selected from the group consisting of BYK 348, BYK 349, Silwet L-77 and Tegowet 240. Structural properties of these surfactants are shown in Table 2 with reference to Formula 4. In particular, BYK 349 has shown to be suitable for the purpose of this embodiment.

In an embodiment, the first surfactant is selected from the group consisting of dialkyl sulfosuccinate salts (surfactant of the third type) and ethoxylated dodecynes (surfactant of the first type) or a combination of both and the second surfactant is an ethoxylated siloxane surfactant (surfactant of the second type) preferably selected from the group consisting of BYK 348, BYK 349, Silwet L-77 and Tegowet 240.

Inventors have found that surfactant mixtures comprising an ethoxylated dodecyne (e.g. according to Formula 3) and an ethoxylated siloxane work extremely well in the context of the present invention. Such mixtures are capable of significantly reducing the static and dynamic surface tensions of an ink composition according to the present invention and the surface tension remains low during drying of the ink composition.

In an embodiment, the mixture of surfactants comprises a third surfactant being a silicone surfactant (surfactant of the second type) different from the second surfactant, in particular an ethoxylated siloxane surfactant different from the second surfactant, preferably selected from the group consisting of BYK 348, BYK 349 (BYK), Silwet L-77 (Sabic), Tegowet 240 (Evonik).

In particular, a mixture of BYK 348 and Tegowet 240 has shown to be suitable for the purpose of this embodiment.

Inks comprising such a mixture of surfactants show a significant improvement of print quality. In particular when such ink compositions are used in single pass printing, such ink compositions improve streakiness (i.e. white areas in the print).

In an embodiment the mixture of surfactants comprises an acetylene glycol and a silicone surfactant, in particular an ethoxylated siloxane, as is exemplified in example 1 of the present application.

*Table 2 structural properties of siloxane surfactants satisfying Formula 4*

| | BYK 348 | BYK 349 | Silwet L-77 | Tegowet 240 |
|---|---|---|---|---|
| $R_g$ (endgroup) | -H | -H | $-CH_3$ | -H |
| $M_n$[1] (gr/mol) | 800 | 700 | 700 | 500 |
| $M_w$[1] (gr/mol) | 1400 | 1250 | 850 | 800 |
| D[1] (-) | 1.8 | 1.9 | 1.3 | 1.5 |
| average n[2] | 12.6 | 8.3 | 11.6 | 8.3 |
| n (range)[3] | 2-12 | 2-11 | 2-7 | 2-15 |
| n (mostly present)[3] | 6 | 5 | 5 | 3-4 |
| m[3] | 1-2 | 1-4 | 1 | 1 |

[1] determined with SEC (method see experimental part)
[2] determined with NMR (method see experimental part)
[3] determined with LC-MS (method see experimental part)

In an embodiment, the mixture of surfactants comprises an acetylene glycol and a silicone surfactant, in particular an ethoxylated siloxane, as is exemplified in example 1 of the present application.

In an embodiment, the mixture of surfactants comprises an ethoxylated acetylene glycol and a silicone surfactant, in particular an ethoxylated siloxane, as is exemplified in examples 2, 3 and 9 of the present application.

In an embodiment, the mixture of surfactants comprises an ethoxylated acetylene glycol, a silicone surfactant, in particular an ethoxylated siloxane and a dialkyl sulfosucinate salt, such as sodium dioctyl sulfosuccinate (AOT), as is

exemplified in examples 4 - 8 of the present application.

In an embodiment, the mixture of surfactants comprises an ethoxylated acetylene glycol and a fluorochemical surfactant, as is exemplified in example 10 of the present application.

In an embodiment, the mixture of surfactants comprises a acetylene glycol and an ethoxylated acetylene glycol as is exemplified in example 11 of the present application. In an embodiment, the first surfactant, the second surfactant and the third surfactant may be individually present in an amount of between 0.01 weight% and 3 weight%, preferably between 0.1 weight% and 2 weight%, more preferably between 0.3 weight% and 1 weight%, relative to the total ink composition.

The total amount of the surfactant contained in the inkjet ink is preferably 0.01 weight% to 3.0 weight%, and more preferably 0.5 weight% to 2 weight%, with respect to the total ink composition. When the amount of the surfactant is less than 0.01 weight%, the effect of adding the surfactant may be substantially reduced or even insignificant. When it is more than 3.0 weight%, the permeability to recording media may be higher than necessary, possibly causing a degradation of image density and occurrence of ink-strikethrough.

Penetrant

The ink composition according to the present invention may optionally further contain a penetrant, which is a compound that promotes absorption of the ink composition in the print medium. Penetrants as used in the present invention preferably comprise at least one of non-wettable polyol compounds having 8 to 11 carbon atoms or glycol ether compounds for the purpose of satisfying the permeability and the solubility in water. Here, the term "non-wettable" means having a solubility in the range of 0.2% by mass to 5.0% by mass in water at 25°C. Note that compounds used as cosolvents as disclosed above, may also act as penetrant.
Among these penetrants, preferred is a 1,3-diol compound represented by general Formula 5.

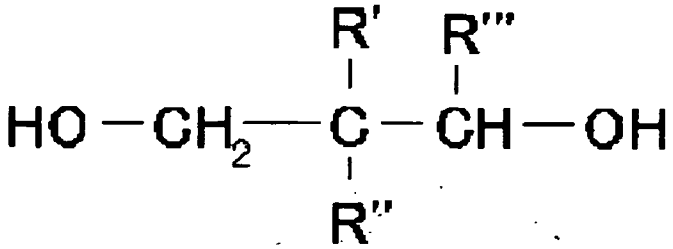

Formula 5

wherein:

R' represents a methyl group or ethyl group;
R" represents a hydrogen atom or methyl group; and
R'" represents an ethyl group or propyl group (including n-propyl and iso-propyl).

Particular examples of penetrants satisfying general Formula 5 are: 2-ethyl-1,3-hexane diol [solubility: 4.2% (25°C)] and 2,2,4-trimethyl-1,3-pentane diol [solubility: 2.0% (25°C)].

Examples of other non-wettable polyol compounds include aliphatic diols such as: 2-ethyl-2-methyl-1,3-propanediol; 3,3-dimethyl-1,2-butanediol; 2,2-diethyl-1,3-propanediol; 2-methyl-2-propyl-1,3-propanediol; 2,4-dimethyl-2,4-pentanediol; 2,5-dimethyl-2,5-hexanediol; and 5-hexen-1,2-diol.

Other penetrants usable alone or in combination with those described above are not particularly limited, as long as they can be dissolved in the ink composition and designed to have desired physical properties, and may be suitably selected in accordance with the intended use. Examples thereof include alkyl and aryl ethers of polyhydric alcohols (e.g., diethylene glycol monophenyl ether, ethylene glycol monophenyl ether, ethylene glycol monoallyl ether, diethylene glycol monophenyl ether, diethylene glycol monobutyl ether, propylene glycol monobutyl ether, and tetraethylene glycol chlorophenyl ether); and lower alcohols (e.g., ethanol).

The amount of the penetrant contained in the inkjet ink is from 0 weight% to 4.0 weight%, preferably from 0.1 weight% to 3.0 weight%, more preferably from 0.5 weight% to 2.0 weight%, relative to the total ink composition.
When the amount of the penetrant is less than 0.1 weight%, quick-dryness may not be obtained, possibly causing image bleeding (coalescence). When it is more than 4.0 weight%, the dispersion stability of colorants and water-dispersible resins may be impaired, easily causing nozzle clogging, and the permeability to recording media may be higher than necessary, possibly causing a degradation of image density and occurrence of ink-strikethrough.

Pre-treatment liquid

To improve the print quality of an inkjet process using an ink according to the present invention, an in particular on machine coated or offset coated media, a pre-treatment step may be applied prior to inkjet printing. A pre-treatment liquid used in such a pre-treatment step may increase the surface tension of the receiving medium and enhance spreading of the ink on the receiving medium. The pre-treatment liquid may also be capable of aggregating the inkjet ink ingredients or thickening (increasing the viscosity of) the inkjet ink by decreasing the solubility of solid components dissolved in the ink. In relation to the latter aspect, the pre-treatment liquid preferably contains at least one of a polyvalent metal salt, an acid and a cationic resin. By contacting the pre-treatment liquid containing a polyvalent metal salt with an ink, the cation contained in the pre-treatment liquid will interact with the pigment, an anion in the (dispersed) resin or other ingredients present in the ink to result in aggregation sedimentation of the ingredients of the ink. This can prevent bleeding or mottling of the ink.

The main solvent contained in the pre-treatment liquid is preferably water (an aqueous pre-treatment liquid), and a water-soluble organic solvent or a surfactant may be contained when needed.

As a polyvalent metal salt which can be applied in a pre-treatment liquid, a salt of a metal with a valence of 2 or more can be used. Examples of a preferable cation include: a divalent metal ion such as $Ca^{2+}$, $Cu^{2+}$, $Ni^{2+}$, $Mg^{2+}$, $Zn^{2+}$ and $Ba^{2+}$; a trivalent metal ion such as $Al^{3+}$, $Fe^{3+}$, $Cr^{3+}$ and $Y^{3+}$; and a tetravalent metal ion such as $Zr^{4+}$. Of the plural, $Ca^{2+}$, $Mg^{2+}$ and $Al^{3+}$ are preferred.

As a type of salt, well-known salts can be used. Examples are salts of: carbonic acid, sulfuric acid, nitric acid, hydrochloric acid, an organic acid, boric acid and phosphoric acid. It is also preferable to adjust a pH value if needed for dissolving the polyvalent metal salt. Of the plural, calcium nitrate, calcium chloride, aluminium nitrate and aluminium chloride are preferred.

As a kind of an acid which can be applied to a pre-treatment liquid, there is no specific limitation. It is preferable to use an acid having of a pKa value smaller than 4.5. Example of such acid include: inorganic acids such as hydrochloric acid, nitric acid, sulfuric acid, phosphoric acid and carbonic acid; organic acids such as carboxylic acid and sulfonic acid. More preferable acids are organic acids having a pKa value smaller than 4.5. The following acids are specifically more preferable: citric acid, isocitric acid, oxalic acid, maleic acid, fumaric acid, malonic acid, succinic acid, glutaric acid, adipic acid, phthalic acid, isophthalic acid, terephthalic acid, citric acid, 2-pyrrolidone-5-carboxylic acid, benzoic acid, a benzoic acid derivative, salicylic acid, ascorbic acid, malic acid, benzenesulfonic acid, a benzenesulfonic acid derivative, pyruvic acid and oxalacetic acid.

Although there is no restriction in particular as a kind of a cationic resin having a positive charge and applicable to a pre-treatment liquid, a resin having a quaternary amine is preferable from the ability to acquire a high effect by a small amount of addition in the pre-treatment liquid.

As a group which gives a resin cationic property, it is preferable to incorporate a metallic cation or a nitrogen cation in the resin. For example, polyallylamine, polyamine, cation modified acrylate resin, cation modified methacrylic resin, cation modified vinyl resin, cationic polyurethane resin, a copolymer thereof can be cited.

It is preferable to incorporate in the pre-treatment liquid additives such as a surfactant or a cosolvent which adjust the liquid properties other than the above-mentioned compound which aggregates the solid ingredients of the ink or increasing a viscosity of the ink.

Examples of the cosolvent which can be incorporated in the pre-treatment liquid include: glycerin, propylene glycol, dipropylene glycol, tripropylene glycol, tetrapropylene glycol, polypropylene glycol, ethylene glycol, diethylene glycol, triethylene glycol, tetraethylene glycol, polyethylene glycols, decaglyserol, 1,4-butanediol, 1,3-butanediol, 1,2,6-hexanetriol, 2-pyrrolidinone, dimethylimidazolidinone, ethylene glycol mono-butyl ether, diethylene glycol monomethyl ether, diethylene glycol monoethyl ether, diethylene glycol mono-propyl ether, diethylene glycol mono-butyl ether, triethylene glycol monomethyl ether, triethylene glycol monoethyl ether, triethylene glycol mono-propyl ether, triethylene glycol mono-butyl ether, tetraethylene glycol monomethyl ether, tetraethylene glycol monoethyl ether, propylene glycol mono-butyl ether, dipropylene glycol monomethyl ether, dipropylene glycol monoethyl ether, dipropylene glycol mono-propyl ether, diethylene glycol monobutyl ether, tripropylene glycol monomethyl ether, tripropylene glycol monoethyl ether, tripropylene glycol monopropyl ether, tripropylene glycol monobutyl ether, tetrapropylene glycol monomethyl ether, diethylene glycol diethyl ether, diethylene glycol dibutyl ether, triethylene glycol diethyl ether, triethylene glycol dibutyl ether, dipropylene glycol dibutyl ether, tri propylene glycol dibutyl ether, 3-methyl 2,4-pentanediol, diethylene-glycol-monoethyl ether acetate, 1,2-hexanediol, 1,2-pentanediol and 1,2-butanediol. Although there is no restriction in particular to the content of an organic solvent, it is preferable that it is in the range of 20 weight% to 60 weight% with respect to the whole pre-treatment liquid.

In order to adjust the suitable liquid properties for the application condition of a pre-treatment liquid onto a coated printing paper, it is preferable to use plural solvents mixed together. It is specifically preferable, from the viewpoints of coating characteristics, drying characteristics, image quality, and safety, that water is included as a part of solvents.

It is preferable that the pre-treatment liquid contains a surfactant in order to adjust the suitable liquid properties

for the application condition onto a coated printing paper. As a surfactant which can be applied to the present invention include: a cationic surfactant, an anionic surfactant, an amphoteric surfactant and a nonionic surfactant. For example, the similar surfactants as shown for the ink of the present invention can be also used for the pre-treatment liquid.

Further, the pre-treatment liquid may contain a variety of additives for the various purposes. Examples of such additives include: polysaccharides, a viscosity modifier, a specific resistance controlling agent, a film forming agent, an UV absorbing agent, an antioxidant, an anti-discoloring agent, an antiseptic agent, or an anti-rusting agent. Specific examples thereof include: minute oil droplets of liquid paraffin, dioctyl phthalate, tricresyl phosphate, or silicone oil; UV absorbing agents; anti-discoloring agents; and optical brightening agents.

A preferable amount of the pre-treatment liquid applied to a receiving medium, in particular to a machine coated or offset coated medium is from 0.05 $ml/m^2$ to 20 $ml/m^2$, preferably from 0.1 $ml/m^2$ to 10 $ml/m^2$ and more preferably it is from 0.5 to 5 $ml/m^2$.

**Receiving media**

Suitable receiving media for use in a printing process using an ink or set of inks (Cyan, Magenta, Yellow and blacK, CMYK) according to the present invention are not particularly limited to any type. The receiving medium may be suitably selected depending on the intended application.

Suitable receiving media may range from strongly water absorbing media such as plain paper (for example Océ Red Label) to non-water-absorbing media such as plastic sheets (for example PE, PP, PVC and PET films). To optimize print quality, inkjet coated media are known, which media comprise a highly water absorbing coating.

Of particular interest in the context of the present invention are Machine Coated (MC) media (also known as offset coated media) and glossy (coated) media. MC media are designed for use in conventional printing processes, for example offset printing and show good absorption characteristics with respect to solvents used in inks used in such printing processes, which are usually organic solvents. MC and glossy media show inferior absorption behavior with respect to water (worse than plain paper, better than plastic sheets), and hence aqueous inks.

Machine coated or offset coated media comprise a base layer and a coating layer.

The base layer may be a sheet of paper mainly made of wood fibers or a non-woven fabric material comprising wood fibers combined with synthetic fibers. The base layer may be made of wood pulp or recycled paper pulp and may be bleached.

As an internal filler for the base, a conventional white pigment may be used. For example, the following substances may be used as a white pigment: an inorganic pigment such as precipitated calcium carbonate, heavy calcium carbonate, kaolin, clay, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic silica, aluminum hydroxide, alumina, lithophone, zeolite, magnesium carbonate, or magnesium hydrate; and an organic pigment such as styrene plastic pigment, acrylic plastic pigment, polyethylene, microcapsule, urea resin, or melamine resin. These may be used alone or in combination.

As an internal sizing agent used when producing the base, a neutral rosin size used for neutral papermaking, alkenyl succinic anhydride (ASA), alkyl ketene dimer (AKD), or a petroleum resin size may be used. Especially, a neutral rosin size and alkenyl succinic anhydride are preferable. Alkyl ketene dimer has a high sizing effect and therefore provides an enough sizing effect with a small amount. However, since alkyl ketene dimer reduces the friction coefficient of the surface of recording paper (medium), recording paper made using alkyl ketene dimer may cause a slip when being conveyed in an ink jet recording apparatus.

The thickness of the base is not particularly limited and may be suitably selected in accordance with the intended use. It is, however, preferably 50 $\mu m$ to 300 $\mu m$. The basis weight of the base is preferably 45 $g/m^2$ to 290 $g/m^2$.

The coating layer may comprise a (white) pigment, a binder and may further contain a surfactant and other components as required.

An inorganic pigment or a combination of an inorganic pigment and an organic pigment can be used as the pigment.

Examples of the inorganic pigment include kaolin, talc, calcium bicarbonate, light calcium carbonate, calcium sulfite, amorphous silica, titanium white, magnesium carbonate, titanium dioxide, aluminum hydroxide, calcium hydroxide, magnesium hydroxide, zinc hydroxide and chlorite. Among these, kaolin is particularly preferable due to its superior glossability. The addition amount of the kaolin is preferably 50 parts by mass or more with respect to 100 parts of the binder in the coating layer. When the amount of kaolin is less than 50 parts by mass, adequate effects are unable to be obtained with respect to glossiness.

Examples of the organic pigment include (aqueous) dispersions of, for example, styrene-acrylic copolymer particles, styrene-butadiene copolymer particles, polystyrene particles or polyethylene particles. These organic pigments may be used in combination. The addition amount of the organic pigment is preferably 2 parts by mass to 20 parts by mass with respect to 100 parts by mass of the total amount of the pigment in the coating layer. Since the organic pigment

has superior glossability and the specific gravity thereof is small in comparison with inorganic pigment, it allows the obtaining of a coating layer having high bulk, high gloss and satisfactory surface coatability.

An aqueous resin is preferably used for the binder. At least one of a water-soluble resin and a water-dispersible resin is preferably used for the aqueous resin. There are no particular limitations on the water-soluble resin, the water-soluble resin can be suitably selected according to the intended use.

Examples thereof include polyvinyl alcohol and polyvinyl alcohol modification products such as anion-modified polyvinyl alcohol, cation-modified polyvinyl alcohol or acetal-modified polyvinyl alcohol; polyurethane; polyvinyl pyrrolidone and polyvinyl pyrrolidone modification products such as copolymers of polyvinyl pyrrolidone and vinyl acetate, copolymers of vinyl pyrrolidone and dimethylaminoethyl methacrylate, copolymers of quaternized vinyl pyrrolidone and dimethylaminoethyl methacrylate or copolymers of vinyl pyrrolidone and methacrylamide propyl trimethyl ammonium chloride; celluloses such as carboxymethyl cellulose, hydroxyethyl cellulose or hydroxypropyl cellulose; cellulose modification products such as cationized hydroxyethyl cellulose; synthetic resins such as polyester, polyacrylic acid (ester), melamine resin or modification products thereof or copolymers of polyester and polyurethane; and poly(meth)acrylic acid, poly(meth)acrylamide, oxidized starch, phosphoric acid-esterified starch, self-modifying starch, cationized starch, various types of modified starch, polyethylene oxide, sodium polyacrylate and sodium arginate. These water-soluble resins may be used alone or in combination.

There are no particular limitations on the water-dispersible resin, a water-dispersible resin can be suitably selected in accordance with the intended use, and examples thereof include polyvinyl acetate, ethylene-vinyl acetate copolymers, polystyrene, styrene-(meth)acrylic acid ester copolymers, (meth)acrylic acid ester copolymers, vinyl acetate-(meth)acrylic acid (ester) copolymers, styrene-butadiene copolymers, ethylenepropylene copolymers, polyvinyl ether and silicone-acrylic copolymers. In addition, a crosslinking agent such as methylolated melamine, methylolated urea, methylolated hydroxypropylene urea or isocyanate may also be contained, and the water-dispersible resin may self-crosslink with a copolymer containing a unit such as N-methylolacrylamide. A plurality of these aqueous resins can also be used simultaneously.

The addition amount of the aqueous resin is preferably 2 parts by mass to 100 parts by mass and more preferably 3 parts by mass to 50 parts by mass with respect to 100 parts by mass of the pigment. The amount of the aqueous resin is determined so that the liquid absorption properties of the recording media are within a desired range.

### Printing process

A printing process in which the inks according to the present invention may be suitably used is described with reference to the appended drawings shown in Fig. 3 and Fig. 4.

Figs. 3 and 4 show schematic representations of an inkjet printing system and inkjet marking device, respectively.

Fig. 3 shows that a sheet of a receiving medium, in particular a machine coated or offset coated medium, P, is transported in a direction for conveyance as indicated by arrows 50 and 51 and with the aid of transportation mechanism 12. Transportation mechanism 12 may be a driven belt system comprising one (as shown in Fig. 3) or more belts. Alternatively, one or more of these belts may be exchanged for one or more drums. A transportation mechanism may be suitably configured depending on the requirements (e.g. sheet registration accuracy) of the sheet transportation in each step of the printing process and may hence comprise one or more driven belts and/or one or more drums. For a proper conveyance of the sheets of receiving medium, the sheets need to be fixed to the transportation mechanism. The way of fixation is not particularly limited and may be selected from electrostatic fixation, mechanical fixation (e.g. clamping) and vacuum fixation. Of these vacuum fixation is preferred.

The printing process as described below comprises of the following steps: media pre-treatment, image formation, drying and fixing and optionally post treatment.

<u>Media pre-treatment</u>

To improve the spreading and pinning (i.e. fixation of pigments and water-dispersed polymer particles) of the ink on the receiving medium, in particular on slow absorbing media, such as machine coated or offset coated media, the receiving medium may be pretreated, i.e. treated prior to printing an image on the medium. The pre-treatment step may comprise one or more of the following:

- preheating of the receiving medium to enhance spreading of the used ink on the receiving medium and/or to enhance absorption of the used ink into the receiving medium;
- primer pre-treatment for increasing the surface tension of receiving medium in order to improve the wettability of the receiving medium by the used ink and to control the stability of the dispersed solid fraction of the ink composition (i.e. pigments and dispersed polymer particles). Primer pre-treatment may be performed in the gas phase, e.g. with gaseous acids such as hydrochloric acid, sulfuric acid, acetic acid, phosphoric acid and lactic acid, or in the liquid

phase by coating the receiving medium with a pre-treatment liquid. The pre-treatment liquid may comprise water as a solvent, one or more cosolvents, additives such as surfactants and at least one compound selected from a polyvalent metal salt, an acid and a cationic resin (discussed in detail above);

- corona or plasma treatment.

*Primer pre-treatment*

As an application way of the pre-treatment liquid, any conventionally known methods can be used. Specific examples of an application way include: a roller coating, an ink-jet application, a curtain coating and a spray coating. There is no specific restriction in the number of times with which the pre-treatment liquid is applied. It may be applied at one time, or it may be applied in two times or more. Application in two times or more may be preferable, since cockling of the coated printing paper can be prevented and the film formed by the surface pre-treatment liquid will produce a uniform dry surface having no wrinkle by applying in 2 steps or more.

Especially a roller coating (see 14 in Fig. 3) method is preferable because this coating method does not need to take into consideration of ejection properties and it can apply the aqueous pre-treatment liquid homogeneously to a recording medium. In addition, the amount of the applied pre-treatment liquid with a roller or with other means to a recording medium can be suitably adjusted by controlling: the physical properties of the pre-treatment liquid; and the contact pressure of a roller in a roller coater to the recording medium and the rotational speed of a roller in a roller coater which is used for a coater of the pre-treatment liquid. As an application area of the pre-treatment liquid, it may be possible to apply only to the printed portion, or to the entire surface of both the printed portion and the non-printed portion. However, when the pre-treatment liquid is applied only to the printed portion, unevenness may occur between the application area and a non-application area caused by swelling of cellulose contained in the coated printing paper with the water in the pre-treatment liquid followed by drying. Then, from the viewpoint of drying uniformly, it is preferable to apply a pre-treatment liquid to the entire surface of a coated printing paper, and roller coating can be preferably used as a coating method to the whole surface.

*Corona or plasma treatment*

Corona or plasma treatment may be used as a pre-treatment step by exposing a sheet of a receiving medium to corona discharge or plasma treatment. In particular when used on media like polyethylene (PE) films, polypropylene (PP) films, polyetyleneterephtalate (PET) films and machine coated or offset coated media, the adhesion and spreading of the ink can be improved by increasing the surface energy of the media. With machine coated or offset coated media, the absorption of water can be promoted which may induce faster fixation of the image and less puddling on the receiving medium. Surface properties of the receiving medium may be tuned by using different gases or gas mixtures as medium in the corona or plasma treatment. Examples are air , oxygen, nitrogen, carbondioxide, methane, fluorine gas, argon, neon and mixtures thereof. Corona treatment in air is most preferred.

Fig. 3 shows that the sheet of receiving medium P may be conveyed to and passed through a first pre-treatment module 13, which module may comprise a preheater, for example a radiation heater, a corona/plasma treatment unit, a gaseous acid treatment unit or a combination of any of the above. Optionally and subsequently, a predetermined quantity of the aqueous pre-treatment liquid is applied on the surface of the receiving medium P at aqueous pre-treatment liquid applying member 14. Specifically, the aqueous pre-treatment liquid is provided from storage tank 15 of the aqueous pre-treatment liquid to the aqueous pre-treatment liquid applying member 14 composed of double rolls 16 and 17. Each surface of the double rolls may be covered with a porous resin material such as sponge. After providing the aqueous pre-treatment liquid to auxiliary roll 16 first, the aqueous pre-treatment liquid is transferred to main roll 17, and a predetermined quantity is applied on the surface of the receiving medium P. Subsequently, the coated printing paper P on which the aqueous pre-treatment liquid was supplied may optionally be heated and dried by drying member 18 which is composed of a drying heater installed at the downstream position of the aqueous pre-treatment liquid applying member 14 in order to decrease the quantity of the water content in the aqueous pre-treatment liquid to a predetermined range. It is preferable to decrease the water content in an amount of 1.0 weight% to 30 weight% based on the total water content in the provided pre-treatment liquid provided on the receiving medium P.

To prevent the transportation mechanism 12 being contaminated with pre-treatment liquid, a cleaning unit (not shown) may be installed and/or the transportation mechanism may be comprised multiple belts or drums as described above. The latter measure prevents contamination of the upstream parts of the transportation mechanism, in particular of the transportation mechanism in the printing region.

Image formation

Image formation is performed in such a manner that, employing an inkjet printer loaded with inkjet inks, ink

droplets are ejected from the inkjet heads based on the digital signals onto a print medium.

Although both single pass inkjet printing and multi pass (i.e. scanning) inkjet printing may be used for image formation, single pass inkjet printing is preferably used since it is effective to perform high-speed printing. Single pass inkjet printing is an inkjet recording method with which ink droplets are deposited onto the receiving medium to form all pixels of the image by a single passage of a receiving medium underneath an inkjet marking module.

In Fig. 3, 11 represents an inkjet marking module comprising four inkjet marking devices, indicated with 111, 112, 113 and 114, each arranged to eject an ink of a different color (e.g. Cyan, Magenta, Yellow and blacK). The nozzle pitch of each head is e.g. about 360 dpi. In the present invention, "dpi" indicates a dot number per 2.54 cm.

An inkjet marking device for use in single pass inkjet printing, 111, 112, 113, 114, has a length, L, of at least the width of the desired printing range, indicated with double arrow 52, the printing range being perpendicular to the media transport direction, indicated with arrows 50 and 51. The inkjet marking device may comprise a single printhead having a length of at least the width of said desired printing range. The inkjet marking device may also be constructed by combining two or more inkjet heads, such that the combined lengths of the individual inkjet heads cover the entire width of the printing range. Such a constructed inkjet marking device is also termed a page wide array (PWA) of printheads. Fig. 4A shows an inkjet marking device111 (112, 113, 114 may be identical) comprising 7 individual inkjet heads (201, 202, 203, 204, 205, 206, 207) which are arranged in two parallel rows, a first row comprising four inkjet heads (201 - 204) and a second row comprising three inkjet heads (205 - 207) which are arranged in a staggered configuration with respect to the inkjet heads of the first row. The staggered arrangement provides a page wide array of nozzles which are substantially equidistant in the length direction of the inkjet marking device. The staggered configuration may also provide a redundancy of nozzles in the area where the inkjet heads of the first row and the second row overlap, see 70 in Fig. 4B. Staggering may further be used to decrease the nozzle pitch (hence increasing the print resolution) in the length direction of the inkjet marking device, e.g. by arranging the second row of inkjet heads such that the positions of the nozzles of the inkjet heads of the second row are shifted in the length direction of the inkjet marking device by half the nozzle pitch, the nozzle pitch being the distance between adjacent nozzles in an inkjet head, $d_{nozzle}$ (see Fig. 4C, which represents a detailed view of 80 in Fig. 4B). The resolution may be further increased by using more rows of inkjet heads, each of which are arranged such that the positions of the nozzles of each row are shifted in the length direction with respect to the positions of the nozzles of all other rows.

In image formation by ejecting an ink, an inkjet head (i.e. printhead) employed may be either an on-demand type or a continuous type inkjet head. As an ink ejection system, there may be usable either the electric-mechanical conversion system (e.g., a single-cavity type, a double-cavity type, a bender type, a piston type, a shear mode type, or a shared wall type), or an electric-thermal conversion system (e.g., a thermal inkjet type, or a Bubble Jet type (registered trade name)). Among them, it is preferable to use a piezo type inkjet recording head which has nozzles of a diameter of 30 $\mu$m or less in the current image forming method.

Fig. 3 shows that after pre-treatment, the receiving medium P is conveyed to upstream part of the inkjet marking module 11. Then, image formation is carried out by each color ink ejecting from each inkjet marking device 111, 112, 113 and 114 arranged so that the whole width of the receiving medium P is covered.

Optionally, the image formation may be carried out while the receiving medium is temperature controlled. For this purpose a temperature control device 19 may be arranged to control the temperature of the surface of the transportation mechanism (e.g. belt or drum) underneath the inkjet marking module 11. The temperature control device 19 may be used to control the surface temperature of the receiving medium P, for example in the range of 30°C to 60°C. The temperature control device 19 may comprise heaters, such as radiation heaters, and a cooling means, for example a cold blast, in order to control the surface temperature of the receiving medium within said range. Subsequently and while printing, the receiving medium P is conveyed to the down stream part of the inkjet marking module 11.

Drying and fixing

After an image has been formed on the receiving medium, the prints have to be dried and the image has to be fixed onto the receiving medium. Drying comprises the evaporation of solvents, in particular those solvents that have poor absorption characteristics with respect to the selected receiving medium.

Fig. 3 schematically shows a drying and fixing unit 20, which may comprise a heater, for example a radiation heater. After an image has been formed, the print is conveyed to and passed through the drying and fixing unit 20. The print is heated such that solvents present in the printed image, to a large extent water, evaporate. The speed of evaporation and hence drying may be enhanced by increasing the air refresh rate in the drying and fixing unit 20. Simultaneously, film formation of the ink occurs, because the prints are heated to a temperature above the minimum film formation temperature (MFFT). The residence time of the print in the drying and fixing unit 20 and the temperature at which the drying and fixing unit 20 operates are optimized, such that when the print leaves the drying and fixing unit 20 a dry and robust print has been obtained. As described above, the transportation mechanism 12 in the fixing and drying unit 20 may be separated from the transportation mechanism of the pre-treatment and printing section of the printing apparatus

and may comprise a belt or a drum.

Post treatment

To increase the print robustness or other properties of a print, such as gloss level, the print may be post treated, which is an optional step in the printing process.

In an embodiment, the prints may be post treated by laminating the prints.

In an embodiment, the post-treatment step comprises a step of applying (e.g. by jetting) a post-treatment liquid onto the surface of the coating layer, onto which the inkjet ink has been applied, so as to form a transparent protective layer on the printed recording medium. In the post-treatment step, the post-treatment liquid may be applied over the entire surface of an image on the recording medium or may be applied only to specific portions of the surface of an image. The method of applying the post-treatment liquid is not particularly limited, and is selected from various methods depending on the type of the post-treatment liquid. However, the same method as used in the coating method of the pre-treatment liquid or an inkjet printing method is preferably used. Of these methods, inkjet printing method is particularly preferable in view of, avoiding contact between the printed image and the used post-treatment liquid applicator; the construction of an inkjet recording apparatus used; and the storage stability of the post-treatment liquid. In the post-treatment step, a post-treatment liquid containing a transparent resin is applied on the surface of a formed image so that a dry adhesion amount of the post-treatment liquid is 0.5 g/$m^2$ to 10 g/$m^2$, preferably 2 g/$m^2$ to 8 g/$m^2$, thereby forming a protective layer on the recording medium. When the dry adhesion amount is less than 0.5 g/$m^2$, almost no improvement in image quality (image density, color saturation, glossiness and fixability) is obtained. When the dry adhesion amount is more than 10 g/$m^2$, it is disadvantageous in cost efficiency, because the dryness of the protective layer degrades and the effect of improving the image quality is saturated.

As a post-treatment liquid, an aqueous solution comprising components capable of forming a transparent protective layer over a recording medium (e.g. a water-dispersible resin, a surfactant, water, and additives as required) is preferably used. The water-dispersible resin comprised in the post-treatment liquid, preferably has a glass transition temperature ($T_g$) of -30°C or higher, and more preferably in the range of -20°C to 100°C. The minimum film forming temperature (MFFT) of the water-dispersible resin is preferably 50°C or lower, and more preferably 35°C or lower. The water-dispersible resin may be radiation curable to improve the glossiness and fixability of the image.

As the water-dispersible resin, for example, an acrylic resin, a styrene-acrylic resin, a urethane resin, an acryl-silicone resin, a fluorine resin and the like are preferably used. The water-dispersible resin can be suitably selected from the same materials as that used for the inkjet ink. The amount of the water-dispersible resin contained, as a solid content, in the protective layer is preferably 1% by mass to 50% by mass. The surfactant comprised in the post-treatment liquid is not particularly limited and may be suitably selected from those used in the inkjet ink. Examples of the other components of the post-treatment liquid include antifungal agents, antifoaming agents, and pH adjustors.

Hitherto, the printing process was described such that the image formation step was performed in-line with the pre-treatment step (e.g. application of an (aqueous) pre-treatment liquid) and a drying and fixing step, all performed by the same apparatus (see Fig. 3). However, the printing process is not restricted to the above-mentioned embodiment. A method in which two or more machines are connected through a belt conveyor, drum conveyor or a roller, and the step of applying an aqueous pre-treatment liquid, the (optional) step of drying a coating solution, the step of ejecting an inkjet ink to form an image and the step or drying an fixing the printed image are performed. It is, however, preferable to carry out image formation with the above defined in-line image forming method.

EXAMPLES

## Materials

All materials used in the examples are used as obtained from the supplier, unless otherwise stated. The suppliers of the used materials are indicated in the specific examples.

The receiving media used in the Examples are the machine coated media Hello gloss (Magno Star produced by Sappi); DFG (Digifinesse gloss, obtained from UPM), TC+ (Top Coated Plus Gloss obtained from Océ), TCP Gloss (Top Coated Pro Gloss obtained from Océ), Hello Matt (Magno Matt produced by Sappi), TCproS (Top Coated Pro Silk obtained from Océ) and MD (MD1084 obtained from Mitsubishi).

## Measurement techniques

Particle diameter

Particle diameter measurement of the pigment dispersion is carried out with a commercially available particle

diameter analyzer, the Malvern Zetasizer Nano series Nano-S) employing a light scattering method, an electrophoretic method, or a laser Doppler method. It is also possible to conduct the measurement via photographic particle images of at least 100 particles with a transmission electron microscope, followed by statistically processing these images using an image analyzing software such as Image-Pro (produced by Media Cybernetics, Inc.).

Surface Tension

The surface tension is measured using a Sita bubble pressure tensiometer, model SITA online t60, according to the (maximum) bubble pressure method. The surface tension of the liquids to be tested (e.g. inks according to the present invention) is measured at 30°C unless otherwise indicated. The static surface tension is determined at a frequency of 0.1 Hz. The dynamic surface tension at 10 Hz.

Viscosity

The viscosity is measured using a Haake Rheometer, type Haake Rheostress RS 600, with a flat plate geometry at a temperature of 32°C unless otherwise indicated. The viscosity is measured at shear rates ($\dot{\gamma}$) of between in the range of between 10 $s^{-1}$ and 1000 $s^{-1}$, unless otherwise indicated.

Dotgain

The standard dotgain is determined in a dedicated experimental set-up by printing on UPM digifinesse gloss media (which is a machine coated medium), unless otherwise indicated, with a dot distance (center to center) of 90μm, unless otherwise indicated. Droplets of an ink composition are jetted with a Dimatix Jet Module model DMC-11610 at a frequency of 3-5kHz and a jetting voltage of between 15 and 22 V.
A jetting nozzle is stroboscopically illuminated using a diffuse LED source. A digital image of the jetting nozzle is captured with a Lumenera high speed CCD camera, type LM165c. The droplet size (diameter) is digitally determined with reference to the known distance between two (adjacent) jetting nozzles. The dot-size is determined using a Zeiss Stemi SV11 microscope with a total magnification factor of 66. The dotgain is determined as the ratio of the average dot-size on the print medium and the average droplet size of the ink in mid-air.

The actual dotgain is determined by using an actual inkjet printer. In this case, the droplet diameter as specified by the printhead supplier (e.g. Kyocera) is used. The dot-size on a print medium is measured in the same way as specified above.

The actual dotgain may differ from the standard dotgain (e.g. due to a systematical error). In the present application the term dotgain refers to the actual dotgain, unless stated otherwise.

Coat-quality (rod-coat experiments)

A layer of a wet ink-composition is applied with a rod-coater of RK Print Coat Instruments U.K., using a rod that provide a coating layer having a thickness of 8μm. TCP Gloss (Top Coated Pro Gloss obtained from Océ) is used as a receiving substrate. The coat quality is visually inspected and classified according to the following rating:

A: smooth (homogenous) coating, remains smooth during drying of the ink composition;
B: moderately smooth coating, no (visible) change during drying of the ink composition;
C: some dewetting occurs during drying of the ink composition (some holes emerge in the coating layer during drying);
D: dewetting occurs during drying of the ink composition (holes emerge in the coating layer during drying)
E: instant dewetting occurs (holes emerge in the coating layer instantly after applying the ink composition).

Stuctural analysis: Size Exclusion Chromatography (SEC), Nuclear Magnetic Resonance (NMR) and Liquid Chromatography - Mass Spectroscopy (LC-MS)

*SEC*

SEC measurements are preformed with an HPLC apparatus having the following specifications:

- isocratic pump;
- column: 2x PL-gel Mixed C + guard (dp = 5 μm, 7.5 x 300mm);
- Triple detection (Viscotek Model 302).

The sample is dissolved in tetrahydrofuran (THF) in a concentration of 3-4 mg/g.
The eluens comprises a mixture of 1% acetic acid (Hac) and tetrahydrofuran (THF) which is pumped trough the column with a flow rate of 0.7 ml/min.
A refraction index signal is used for calibration and determination of the molecular distribution of the samples.
Calibration is based on small polystyrene standards and therefore the Mn, Mw and Mz are relative.

*NMR*

NMR measurements are performed with a NMR DPX-400 equipped with a 5 mm CPTCI 1H-13C/15N/D Z-GRD Z 75810/0002 Cryoprobe. The sample (e.g. a surfactant) is dissolved in deuterated chloroform. The chemical structure of the samples are investigated using 1 and 2 dimensional programs. The chemical structure is quantified using quantitative proton NMR.

*LC-MS*

LC-MS measurements are performed with an apparatus having the following specifications:

- HPLC: 4 canals gradient pump with low pressure mixture (Waters);
- column: Acclaim Surfactant column (Dionex- Thermo Fisher);
- ELSD (light scattering detector): Alltech 2000E, 40°C;
- MS: ESI-TOF-MS (Micromass LCT).

The sample is dissolved in a mixture of tetrahydrofuran (THF) and acetonitrile (ACN) in a ratio THF:ACN of 70:30 v/v%. The concentration of the sample in the THF:ACN mixture is 1.5 mg/g. The following gradient program is used (A = UHQ (i.e. Ultra High Quality Water) + 0.1 M $NH_4Ac$ (Ammoniumacetate); B = ACN + 0.2 mL HAc/L (Hac is acetic acid)) 0 min 75% A $\rightarrow$ 25 min 15% A $\rightarrow$ 30 min 15% A $\rightarrow$ 30.5 min 75% A $\rightarrow$ end time 35min, with a total flow of 1ml/min.

**Experiments**

Experiment 1 : preparation of a latex ink composition

113.6 grams of NeoCryl A-1127 latex (obtained from DSM, 44 weight% latex, the latex particles having an average particle diameter D50 of ±60 nm.), 285.7 grams of Pro-Jet Cyan APD 1000 pigment dispersion (14 weight% pigment dispersion, obtained from FujiFilm Imaging Colorants), 190 grams of glycerin (obtained from Sigma Aldrich), 190 grams of 1,2-propanediol (obtained from Sigma Aldrich), 10 grams of sodium dioctyl sulfosuccinate, AOT (obtained from Sigma Aldrich)and 210.7 grams of demineralized water were mixed in a vessel, stirred for approximately 60 minutes and filtered over a Pall Profile Star absolute glass filter having a pore size of 1 μm.
The obtained ink composition comprises:

- 5 weight% NeoCryl A-1127 latex (amount of solids relative to the total ink composition);
- 4 weight% Pro-jet Cyan APD 1000 pigment (amount of solids relative to the total ink composition);
- 19 weight% glycerol;
- 19 weight% 1,2 propanediol (propylene glycol);
- 1 weight% AOT; and
- 52 weight% water.

<u>Experiments 2-11 : preparation of latex ink compositions</u>

Experiment 1 was repeated with a different surfactant, respectively Surfynol 104 (2,4,7,9-tetramethyl-5-decyne-4,7-diol, obtained from Air Products), Surfynol 440 (ethoxylated 2,4,7,9-tetramethyl-5-decyne-4,7-diol, obtained from Air Products), Dynol 604 (obtained from Air Products), Dynol 607 (obtained from Air Products), BYK 331, BYK 341, BYK 348, BYK 349 (obtained from BYK), Tegowet 240 (obtained from Evonik) and Silwet L-77 (obtained from Sabic). In experiments 2-11, the respective surfactant was added in an amount of 1 weight% with respect to the total ink composition.
Of the ink compositions obtained in experiments 1-11 the static (0.1 Hz), the dynamic (10 Hz) surface tension at 30°C and the standard dotgain were measured. The results are shown in Table 3. The correlation between the dynamic surface tension and the dotgain is also shown in Fig. 1.
Table 3 shows that from the viewpoint of coat-quality of the ink compositions according to experiments 1-11,

of the ethoxylated acetylene glycol surfactants, Dynol 607 is preferred and of the siloxane surfactants BYK 348, BYK 349, Tegowet 240 and/or Silwet L-77 are preferred.

*Table 3 Surface tension, standard dotgain (on UPM Digifinesse gloss print medium) and coat quality of inks according to experiments 1-11*

| Experiment | surfactant | Surface tension 0.1 Hz [mN/m] | Surface tension 10 Hz [m N/m] | Standard dotgain | Coat Quality[2)] |
|---|---|---|---|---|---|
| 1 | AOT | 26.1 | 31.0 | 2.41 | E |
| 2 | Surfynol 104 | 29.7 | 37.8 | 2.09 | n.d.[1)] |
| 3 | Surfynol 440 | 31.5 | 38.3 | 2.36 | D |
| 4 | Dynol 604 | 29.2 | 46.5 | 1.80 | D |
| 5 | Dynol 607 | 29.1 | 36.9 | 2.16 | A |
| 6 | BYK 331 | 39.2 | 48.2 | 1.64 | C |
| 7 | BYK 341 | 39.2 | 47.4 | 1.70 | C |
| 8 | BYK 348 | 23.0 | 50.3 | 1.65 | B |
| 9 | BYK 349 | 23.0 | 48.7 | 1.92 | A |
| 10 | Tegowet 240 | 23.5 | 40.6 | 2.03 | A |
| 11 | Silwet L-77 | 25.3 | 43.0 | 1.92 | A |
| [1)] not determined<br>[2)] determined with rod-coat experiments : A = smooth coating; B = moderately smooth coating; C = some dewetting during drying; D = dewetting during drying; E = instant dewetting (see measurement methods). | | | | | |

Fig. 1 schematically shows the correlation between the dynamic surface tension (x-axis) of inks containing 1 weight% surfactant and the dotgain (y-axis). Fig. 1 clearly shows that the dotgain correlates well with the dynamic surface tension (curve 1)

<u>Comparative Example A preparation of a latex ink composition comprising a mixture of two surfactants.</u>

Experiment 1 was repeated with a mixture of surfactants consisting of AOT and BYK 349 (instead of solely AOT) and Pro-Jet Black APD 1000 (obtained from FujiFilm Imaging Colorants). The amounts of the components were adapted such that the resulting ink composition comprised:

- 5 weight% Neocryl A-1127 latex (amount of solids relative to the total ink composition);
- 4 weight% Pro-Jet Black APD 1000 pigment (amount of solids relative to the total ink composition);
- 19.5 weight% glycerol;
- 19.5 weight% propylene glycol;
- 0.4 weight% AOT (surfactant of the third type)
- 0.25 weight% BYK 349 (surfactant of the second type); and
- 51.35 weight% water.

All amounts are relative to the total ink composition. The total amount of surfactants comprised 0.65 weight%.
The surface tension of the ink composition was 26.5 mN/m at 0.1 Hz and 34.0 mN/m at 10 Hz. A standard dotgain (on UPM digifinesse gloss print medium) of 2.16 has been obtained.

<u>Example 1 preparation of a latex ink composition comprising a mixture of two surfactants.</u>

Experiment 1 was repeated with a mixture of surfactants consisting of Surfynol 104 and BYK 349 (instead of AOT). The amounts of the components were adapted such that the resulting ink composition comprised:

- 5 weight% Neocryl A-1127 latex (amount of solids relative to the total ink composition);
- 4 weight% Pro-Jet Cyan APD 1000 pigment (amount of solids relative to the total ink composition);

- 19.0 weight% glycerol;
- 19.0 weight% propylene glycol;
- 1.0 weight% surfynol 104 (surfactant of the first type)
- 0.6 weight% BYK 349 (surfactant of the second type); and
- 51.4 weight% water.

All amounts are relative to the total ink composition. The total amount of surfactants comprised 1.6 weight%.

The surface tension of the ink composition was 25.4 mN/m at 0.1 Hz and 34.0 mN/m at 10 Hz. A standard dotgain (on UPM digifinesse gloss print medium) of 2.21 has been obtained.

<u>Example 2 preparation of a latex ink composition comprising a mixture of two surfactants.</u>

Experiment 1 was repeated with a mixture of surfactants consisting of Surfynol 440 and BYK 349 (instead of AOT). The amounts of the components were adapted such that the resulting ink composition comprised:

- 5 weight% Neocryl A-1127 latex (amount of solids relative to the total ink composition);
- 4 weight% Pro-Jet Cyan APD 1000 pigment (amount of solids relative to the total ink composition);
- 19.0 weight% glycerol;
- 19.0 weight% propylene glycol;
- 1.0 weight% surfynol 440 (surfactant of the first type)
- 0.6 weight% BYK 349 (surfactant of the second type); and
- 51.4 weight% water.

All amounts are relative to the total ink composition. The total amount of surfactants comprised 1.6 weight%. The surface tension of the ink composition was 24.5 mN/m at 0.1 Hz and 33.4 mN/m at 10 Hz. A standard dotgain (on UPM digifinesse gloss print medium) of 2.31 has been obtained.

<u>Example 3 preparation of a latex ink composition comprising a mixture of two surfactants.</u>

Experiment 1 was repeated with a mixture of surfactants consisting of Dynol 607 and BYK 349 (instead of AOT). The amounts of the components were adapted such that the resulting ink composition comprised:

- 5 weight% Neocryl A-1127 latex (amount of solids relative to the total ink composition);
- 4 weight% Pro-Jet Cyan APD 1000 pigment (amount of solids relative to the total ink composition);
- 19.0 weight% glycerol;
- 19.0 weight% propylene glycol;
- 1.0 weight% Dynol 607 (surfactant of the first type)
- 0.6 weight% BYK 349 (surfactant of the second type); and
- 51.4 weight% water.

All amounts are relative to the total ink composition. The total amount of surfactants comprised 1.6 weight%. The surface tension of the ink composition was 25.1 mN/m at 0.1 Hz and 34.2 mN/m at 10 Hz. A standard dotgain (on UPM digifinesse gloss print medium) of 2.37 has been obtained.

<u>Example 4 preparation of a latex ink composition comprising a mixture of three surfactants.</u>

995 grams of the latex ink composition of Comparative Example A were mixed with 5 grams of Dynol 607 and stirred. The ink composition according to the present example comprised:

- 4.98 weight% Neocryl A-1127 latex (amount of solids relative to the total ink composition);
- 3.98 weight% Pro-Jet Black APD 1000 pigment (amount of solids relative to the total ink composition);
- 19.4 weight% glycerin;
- 19.4 weight% propylene glycol;
- 0.4 weight% AOT (surfactant of the third type);
- 0.25 weight% BYK 349 (surfactant of the second type);
- 0.50 weight% Dynol 607 (surfactant of the first type); and
- 51.09 weight% water.

All amounts are relative to the total ink composition. The total amount of surfactants comprised 1.15 weight%. The surface tension of the ink composition was 25.9 mN/m at 0.1 Hz and 31.5 mN/m at 10 Hz. A standard dotgain (on UPM digifinesse gloss print medium) of 2.27 has been obtained.

Example 5 preparation of a latex ink composition comprising a mixture of three surfactants.

990 grams of the latex ink composition of Comparative Example A were mixed with 10 grams of Dynol 607 and stirred. The ink composition according to the present example comprised:

- 4.95 weight% Neocryl A-1127 latex (amount of solids relative to the total ink composition);
- 3.96 weight% Pro-Jet Black APD 1000 pigment (amount of solids relative to the total ink composition);
- 19.31 weight% glycerin;
- 19.31 weight% propylene glycol;
- 0.4 weight% AOT (surfactant of the third type);
- 0.25 weight% BYK 349 (surfactant of the second type);
- 1.00 weight% Dynol 607 (surfactant of the first type); and
- 50.84 weight% water.

All amounts are relative to the total ink composition. The total amount of surfactants comprised 1.65 weight%. The surface tension of the ink composition was 26.0 mN/m at 0.1 Hz and 31.1 mN/m at 10 Hz. A standard dotgain (on UPM digifinesse gloss print medium) of 2.32 has been obtained.

Example 6 preparation of a latex ink composition comprising a mixture of three surfactants.

980 grams of the latex ink composition of Comparative Example A were mixed with 20 grams of Dynol 607 and stirred. The ink composition according to the present example comprised:

- 4.90 weight% Neocryl A-1127 latex (amount of solids relative to the total ink composition);
- 3.92 weight% Pro-Jet Black APD 1000 pigment (amount of solids relative to the total ink composition);
- 19.11 weight% glycerin;
- 19.11 weight% propylene glycol;
- 0.39 weight% AOT (surfactant of the third type);
- 0.25 weight% BYK 349 (surfactant of the second type);
- 2.00 weight% Dynol 607 (surfactant of the first type); and
- 50.32 weight% water.

All amounts are relative to the total ink composition. The total amount of surfactants comprised 2.64 weight%. The surface tension of the ink composition was 26.1 at 0.1 Hz and 31.6 mN/m at 10 Hz. A standard dotgain (on UPM digifinesse gloss print medium) of 2.40 has been obtained.

Example 7 preparation of a latex ink composition comprising a mixture of three surfactants.

Example 5 was repeated with a Surfynol 440 instead of Dynol 607. The amounts of the components were adapted such that the resulting ink composition comprised:

- 4.95 weight% Neocryl A-1127 latex (amount of solids relative to the total ink composition);
- 3.96 weight% Pro-Jet Black APD 1000 pigment (amount of solids relative to the total ink composition);
- 19.31 weight% glycerin;
- 19.31 weight% propylene glycol;
- 0.4 weight% AOT (surfactant of the third type);
- 0.25 weight% BYK 349 (surfactant of the second type);
- 1.00 weight% Surfynol 440 (surfactant of the first type); and
- 50.84 weight% water.

All amounts are relative to the total ink composition. The total amount of surfactants comprised 1.65 weight%. The surface tension of the ink composition was 25.1 at 0.1 Hz and 31.8 mN/m at 10 Hz. A standard dotgain (on UPM digifinesse gloss print medium) of 2.38 has been obtained.

Comparative Example B preparation of a latex ink composition comprising a polar and apolar cosolvent and a mixture of two surfactants.

Comparative Example A was repeated with dipropylene glycol methyl ether (obtained from DOW Chemical Company) as an apolar cosolvent (instead of 1,2 propane diol). The amounts of the components were adapted such that the resulting ink composition comprised:

- 5 weight% Neocryl A-1127 latex (amount of solids relative to the total ink composition);
- 4 weight% Pro-Jet Black APD 1000 pigment (amount of solids relative to the total ink composition);
- 19.5 weight% glycerin (polar cosolvent; $\varepsilon_r$ = 42.5);
- 19.5 weight% dipropylene glycol methyl ether (apolar cosolvent; $\varepsilon_r$ = 10.44);
- 0.4 weight% AOT (surfactant of the third type);
- 0.25 weight% BYK 349 (surfactant of the second type); and
- 51.35 weight% water.

The difference between the relative dielectric constants of the cosolvents is $\Delta\varepsilon_r$ = 32.06.

The surface tension of the ink composition was 26.2 mN/m at 0.1 Hz and 35.6 mN/m at 10 Hz. A standard dotgain (on UPM digifinesse gloss print medium) of 2.05 has been obtained.

Example 8 preparation of a latex ink composition comprising a polar and apolar cosolvent and a mixture of three surfactants.

990 grams of the latex ink composition of Comparative Example B were mixed with 10 grams of Dynol 607 and stirred. The ink composition according to the present example comprised:

The obtained ink composition comprised:

- 4.95 weight% Neocryl A-1127 latex (amount of solids relative to the total ink composition);
- 3.96 weight% Pro-Jet Black APD 1000 pigment (amount of solids relative to the total ink composition);
- 19.31 weight% glycerin (polar cosolvent; $\varepsilon_r$ = 42.5);
- 19.31 weight% dipropylene glycol methyl ether (apolar cosolvent; $\varepsilon_r$ = 10.44);
- 0.4 weight% AOT (surfactant of the third type);
- 0.25 weight% BYK 349 (surfactant of the second type);
- 1.00 weight% Dynol 607 (surfactant of the first type); and
- 50.84 weight% water.

The surface tension of the ink composition was 26.5 mN/m at 0.1 Hz and 34.4 mN/m at 10 Hz. A standard dotgain (on UPM digifinesse gloss print medium) of 2.28 has been obtained.

Example 9 preparation of a latex ink composition comprising a polymeric cosolvent and a mixture of three surfactants

A latex ink composition was prepared in a similar manner as in Experiment 1. As a latex, Neocryl A-662 latex (obtained from DSM, 40 weight% latex, the latex particles having an average particle diameter D50 of ±100 nm, the latex having an MFFT > 90°C and a $T_g$ of 97°C.) was used instead of Neocryl A-1127. PEG600 (obtained from Sigma Aldrich) was used as a polymeric cosolvent instead of glycerol. A mixture of surfactants comprising BYK 348, Tegowet 240 and Dynol 607 was used. The amounts of the components were adapted such that the resulting ink composition comprised:

- 6.8 weight% Neocryl A-662 latex (amount of solids relative to the total ink composition);
- 4 weight% Pro-Jet Cyan APD 1000 pigment (amount of solids relative to the total ink composition);
- 21.5 weight% PEG600 (polymeric cosolvent);
- 5 weight% 1,2-propanediol;
- 0.87 weight% Dynol 607 (surfactant of the first type)
- 0.35 weight% BYK 348 (surfactant of the second type);
- 0.35 weight% Tegowet 240 (surfactant of the second type); and
- 61.13 weight% water.

The surface tension of the ink composition was 23.5 mN/m at 0.1 Hz and 30.0 mN/m at 10 Hz. An actual dotgain

(on UPM digifinesse gloss print medium) of 2.68 has been obtained.

Example 10 preparation of a latex ink composition comprising a mixture of two latices and a mixture of two surfactants

A latex ink composition was prepared in a similar manner as in Experiment 1. A mixture of latices Neocryl A-662 latex (obtained from DSM, 40 weight% latex, the latex particles having an average particle diameter D50 of ±100 nm, the latex having an MFFT > 90°C and a $T_g$ of 97°C.) and Neocryl XK237 (an acrylic latex obtained from DSM) was used instead of Neocryl A-1127. As cosolvents glycerol (obtained from Sigma Aldrich) and betaine (i.e. trimethylglycine obtained from Sigma Aldrich were used. A mixture of surfactants comprising Dynol 607 (obtained from Air Products) and Zonyl FS-300 (a fluorochemical surfactant obtained from Sigma Aldrich was used. The amounts of the components were adapted such that the resulting ink composition comprised:

- 9.5 weight% Neocryl A-662 latex (amount of solids relative to the total ink composition);
- 2.5 weight% Neocryl XK237 latex (amount of solids relative to the total ink composition);
- 1.9 weight% Pro-Jet Cyan APD 1000 pigment (amount of solids relative to the total ink composition);
- 15,3 weight% glycerol;
- 15.3 weight% betaine;
- 0.95 weight% Isopropyl alcohol (Sigma Aldrich);
- 0.96 weight% dipropyleneglycol methyl ether (Sigma Aldrich)
- 0.96 weight% 1,2-hexanediol (Sigma Aldrich)
- 0.29 weight% Vantex-T (N,N-diethanol-n-butylamine obtained from Taminco)
- 0.94 weight% Dynol 607 (surfactant of the first type)
- 0.41 weight% Zonyl FS-300 (surfactant of the second type); and
- 50.99 weight% water.

The surface tension of the ink composition was 24.5 mN/m at 0.1 Hz and 32.9mN/m at 10 Hz. An actual dotgain (on UPM digifinesse gloss print medium) of 2.7 has been obtained.

Example 11 preparation of a latex ink composition comprising a mixture of two latices and a mixture of two surfactants

A latex ink composition was prepared in a similar manner as in Experiment 1. A mixture of latices Neocryl A-662 latex (obtained from DSM, 40 weight% latex, the latex particles having an average particle diameter D50 of ±100 nm, the latex having an MFFT > 90°C and a $T_g$ of 97°C.) and Lubrijet N-240 (an acrylic latex obtained from Lubrizol Ltd GB, 40 weight% latex, the latex particles having an average particle diameter D50 of ±60 nm, the latex having an MFFT < 10°C and a $T_g$ of 28°C) was used instead of Neocryl A-1127. As cosolvents glycerol (obtained from Sigma Aldrich) and betaine (i.e. trimethylglycine obtained from Sigma Aldrich) were used. A mixture of surfactants comprising Surfynol 104 (an acetylene glycol obtained from Air Products) and Dynol 604 (an ethoxylated acetylene glycol obtained from Air Products). The amounts of the components were adapted such that the resulting ink composition comprised:

- 4.0 weight% Neocryl A-662 latex (amount of solids relative to the total ink composition);
- 4.0 weight% Lubrijet N-240 latex (amount of solids relative to the total ink composition);
- 2.2 weight% Pro-Jet Cyan APD 1000 pigment (amount of solids relative to the total ink composition);
- 13.0 weight% glycerol;
- 13.0 weight% betaine;
- 0.3 weight% Vantex-T (N,N-diethanol-n-butylamine obtained from Taminco)
- 0.5 weight% ethylene glycol (obtained from Sigma Aldrich);
- 0.5 weight% Surfynol 104 (surfactant of the first type)
- 0.3 weight% Dynol 604 (surfactant of the first type); and
- 62.2 weight% water.

The surface tension of the ink composition was 27.3 mN/m at 0.1 Hz and 34.0 mN/m at 10 Hz. An actual dotgain (on UPM digifinesse gloss print medium) of 2.5 has been obtained.

Ink properties of latex inks according to examples 1-11 and comparative examples A and B are summarized in Table 4.

Table 4 shows that the latex ink compositions according to Comparative Example A Examples 5 and 6 all show an actual dotgain (on UPM digifinesse gloss) of 2.8 or higher. The standard dotgain of the inks according to said examples increases with increasing Dynol 607 concentration. The actual dotgain, however, seems to have an optimum at a Dynol 607 concentration of 1 weight%.

*Table 4 ink properties*

| Example | Static surface tension (0.1 Hz) [mN/m] | Dynamic surface tension (10 Hz) [mN/m] | Standard dotgain [-] | Actual dotgain [1] [-] |
|---|---|---|---|---|
| comp. ex. A | 26.5 | 34 | 2.16 | 2.89 |
| 1 | 25.4 | 34 | 2.21 | n.d.[2] |
| 2 | 24.5 | 33.4 | 2.31 | n.d.[2] |
| 3 | 25.1 | 34.2 | 2.37 | n.d.[2] |
| 4 | 25.9 | 31.5 | 2.27 | n.d.[2] |
| 5 | 26 | 31.1 | 2.32 | 2.99 |
| 6 | 26.1 | 31.6 | 2.4 | 2.92 |
| 7 | 25.1 | 31.8 | 2.38 | n.d.[2] |
| comp. ex. B | 26.2 | 35.6 | 2.05 | n.d.[2] |
| 8 | 26.5 | 34.4 | 2.28 | n.d.[2] |
| 9 | 23.5 | 30 | n.d.[2] | 2.68 |
| 10 | 24.5 | 32.9 | n.d. [2] | 2.7 |
| 11 | 27.3 | 34.0 | n.d. [2] | 2.5 |

[1] The actual dotgain is determined with a Kyocera type KJ4B printhead (in an actual printer) with dropletsize 3, which is 26.7 μm (10 pl) for the ink according to Comparative Example A; 26.3 μm (9.5 pl) for the ink according to example 5; and 26 μm (9.2 pl) for the ink according to example 6. The actual dotgain values shown in Table 4 are determined on UPM digifinesse gloss print medium.
[2] not determined

Example 12 determination of dotgain of latex inks according to Comparative Example A and Examples 5, 6, 9, 10 and 11 on different media.

The inks according to Comparative Example A, examples 5, 6, 9, 10 and 11 were printed on a number of different receiving media. The actual dotgains on said media were determined. The results are shown in Table 5.

*Table 5 Actual dotgain of inks according to Comparative Example (CE) A, examples (Ex.) 5, 6, 9, 10 and 11 on a range of receiving media*

| Medium | CE A | Ex. 5 | Ex. 6 | Ex. 9 | Ex. 10 | Ex. 11 |
|---|---|---|---|---|---|---|
| Hello gloss | 2.37 | 2.53 | 2.45 | 2.56 | 2.8 | 2.2 |
| DigiFinesse Gloss (DFG) | 2.85 | 2.99 | 2.91 | 2.68 | 2.7 | 2.5 |
| Top CoatedPlus Gloss (TC+) | 2.42 | 2.67 | 2.67 | 2.65 | n.d.[4] | 2.4 |
| Top Coated Pro Gloss (TCP Gloss) | 2.45 | 2.87 | 2.78 | n.d.[4] | 2.6 | 2.3 |
| Hello Matt | 2.59 | 3.12 | 3.19 | n.d.[4] | 3.1 | 2.6 |
| Top Coated Pro Silk (TCproS) | 2.65 | 3.11 | 2.63 | 2.86 | n.d.[4] | 2.6 |
| Mitsubishi MD1084 | 2.29 | 2.46 | 2.47 | n.d.[4] | n.d.[4] | n.d.[4] |

[4] not determined

Table 5 shows that the latex ink compositions according to Examples 5, 6, 9, 10 and 11 showed an actual dotgain of 2.5 or higher on a wide range of media:

Example 5 : six out of seven tested media;
Example 6 : five out of seven tested media;
Example 9 : four out of four tested media. The dotgains of the ink according to example 9 on TCP Gloss, Hello Matt and Mitsubishi MD1084 have not been determined. Therefore, *at least four* out of the total of seven media showed a dotgain above 2.5;
Example 10: four out of four tested media (i.e. at least four out or seven media);
Example 11: three out of six tested media (i.e. at least three out of seven media, but at most four out of seven media).

With the ink according to Comparative Example A, three coated media out of seven tested media showed an actual dotgain of 2.5 or higher. Therefore, the range of media on which an ink according to the present invention has been printed, which has lead to a dotgain of 2.5 or higher (e.g. Examples 5, 6, 9, 10 and 11) is equal to or larger than inks according to the prior art (e.g. Comparative Example A).

Table 5 shows that the latex ink composition according to example 5, comprising 1 weight% Dynol 607, shows a dotgain of 2.8 or higher for four of the seven tested media, while the inks according to Comparative Example A (no Dynol 607) and example 6 (2 weight% Dynol 607) only show a dotgain of 2.8 or higher on one and two of the seven tested media, respectively.
The ink composition according to example 9 (0.87 weight% Dynol 607) shows an actual dotgain of above 2.8 for one of the four tested media. The ink according to this example comprises a polymeric cosolvent (PEG 600) which thickens the ink during drying.

Fig. 2 shows the drying behavior of the inks of Comparative Example A (ink X in Fig. 2, curve 2) and Example 9 (ink Y in Fig. 2, curve 3). Fig. 2 shows the viscosity (y-axis) as a function of the drying time (x-axis). Fig. 2 clearly shows that an ink containing a polymeric cosolvent (ink Y) shows a faster viscosity increase over time than inks comprising monomeric cosolvents (ink X). The ink according to example 6 may be considered as a "viscously thickening ink". The thickening behavior limits the spreading of printed ink drops upon drying and hence prevents or at least mitigates coalescence and image bleeding. The decrease in coalescence level is indicated with arrow 4.

The inks of examples 1-11 according to the present invention showed excellent reliability and good print quality on machine coated or offset coated media.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed.

## Claims

**1.** Ink composition, suitable for being ejected from an inkjet marking device at an operating temperature of between 15°C and 50°C, the ink composition comprising:

- 1-40 weight% of a water-dispersible resin;
- 0.5 - 15 weight% of a water-dispersible colorant;
- 20-80 weight% water;
- 0-75 weight% of a cosolvent;
- 0.01 - 3 weight% of a mixture of surfactants comprising at least one surfactant of a first type being an ethoxylated acetylene glycol and at least one surfactant of a second type selected from the group consisting of silicone surfactants and fluorochemical surfactants;

wherein all amounts are relative to the total ink composition, and wherein the ink composition has a dynamic surface tension of below 35 mN/m measured at 10Hz and a static surface tension measured at 0.1 Hz of above 21 mN/m both determined at the operating temperature with the bubble pressure method, wherein the amount of the mixture of surfactants is sufficient to obtain said dynamic and static surface tensions.

**2.** The ink composition according to claim 1, wherein the ink composition has a static surface tension of below 30 mN/m.

**3.** The ink composition according to any one of the preceding claims. wherein the ethoxylated acetylene glycol has a general structure satisfying the formula below:

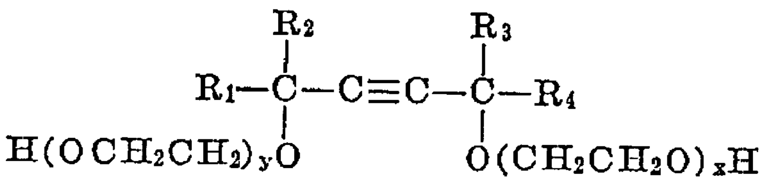

wherein $R_1$ and $R_4$ are the same or different alkyl radicals having from 3-10 carbon atoms and $R_2$ and $R_3$ are the same or different and selected from methyl and ethyl and x and y are both integers and have a sum in the range of 3 to 60.

4. The ink composition according to claim 3., wherein $R_1$ and $R_4$ are the same alkyl radicals having from 3-6 carbon atoms and $R_2$ and $R_3$ are methyl.

5. The ink composition according to any one of the preceding claims, wherein the surfactant of the first type is an ethoxylated acetylene glycol, selected from the group consisting of ethoxylated 3-methyl-1-nonyn-3-ol, ethoxylated 7,10-dimethyl-8-hexadecyne-7,10-diol, ethoxylated 4,7-dimethyl-5-decyne-4,7-diol, ethoxylated 2,4,7,9-tetramethyl-5-decyne-4,7-diol, ethoxylated 2,5,8,11-tetramethyl-6-dodecyne-5,8-diol, and combinations thereof.

6. The ink composition according to any one of the preceding claims, wherein the surfactant of the first type is an ethoxylated acetylene glycol having a number average molar weight ($M_n$) in a range of between 300 g/mol and 800 g/mol.

7. The ink composition according to any one of the preceding claims, wherein the surfactant of the second type is an ethoxylated siloxane surfactant, having a general formula as shown below:

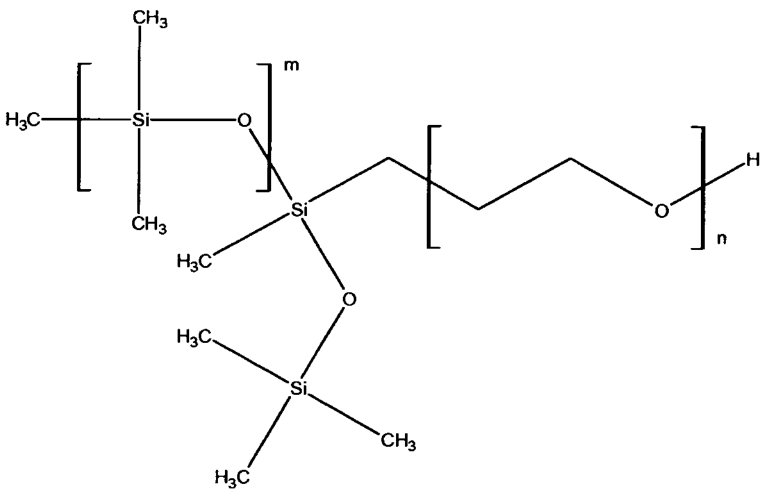

wherein, m is an integer ranging from 1-25 and wherein n is an integer ranging from 1-10.

8. The ink composition according to any one of the preceding claims, wherein the mixture of surfactants comprises a surfactant of a third type being a dialkyl sulfosuccinate salt, in particular sodium dioctyl sulfosuccinate.

9. The ink composition according to any one of the preceding claims, wherein the mixture of surfactants is present in a total amount of 1-2 wt% relative to the total ink composition.

10. The ink composition according to any one of the preceding claims, wherein the weight ratio between surfactant of the first type and the surfactant of the second type is between 1 and 10, preferably between 1.5 and 5.

11. The ink composition according to any one of the preceding claims, wherein the water-dispersible resin is selected from the group consisting of: polyester resins, polyurethane resins, polyepoxy resins, polyamide resins, polyether resins, poly(meth)acrylic resins, acryl-silicone resins, fluorine-based resins, polyolefin resins, polystyrene-based resins, polybutadiene-based resins, polyvinyl acetate-based resins, polyvinyl alcohol-based resins, polyvinyl ester-based resins, polyvinyl chloride-based resins, polyacrylic acid-based resins, unsaturated carboxylic acid-based resins and copolymers such as styrene - acrylate copolymer resins, styrene-butadiene copolymer resins.

**12.** The ink composition according to any one of the preceding claims, wherein the cosolvent comprises a water-soluble organic solvent being selected from the group consisting of: polyhydric alcohols, polyhydric alcohol alkyl ethers, polyhydric alcohol aryl ethers, nitrogen-containing heterocyclic compounds, amides, amines, ammonium compounds, sulfur-containing compounds, propylene carbonate, and ethylene carbonate.

**13.** The ink composition according to any one of the preceding claims, wherein the ink composition comprises a mixture of water-soluble organic solvents, each water-soluble organic solvent being present in an amount of between 1 weight% to 50 weight%, with respect to the total ink composition.

**14.** The ink composition according to claim 13, wherein the mixture of water-soluble organic solvents comprises a first water-soluble organic solvent having a first relative dielectric constant and a second water-soluble organic solvent having a second relative dielectric constant, wherein the difference between the first relative dielectric constant and the second dielectric constant is more than 5, preferably between 10 and 50.

**15.** The ink composition according to any one of the preceding claims, wherein the ink composition comprises at least one oligomeric or polymeric cosolvent, in particular at least one selected from the group consisting of polyethylene glycols and polyethylene glycol (di)methyl ethers.

**Patentansprüche**

**1.** Tintenzusammensetzung, die geeignet ist, bei einer Betriebstemperatur zwischen 15°C und 50°C aus einer Tintenstrahl-Markierungseinrichtung ausgestoßen zu werden, wobei die Tintenzusammensetzung enthält:

- 1-40 Gew.% eines in Wasser dispergierbaren Harzes;
- 0,5-15 Gew.% eines in Wasser dispergierbaren Färbemittels;
- 20 - 80 Gew.% Wasser
- 0-75 Gew.% eines Co-Lösungsmittels;
- 0,01 - 3 Gew.% eines Gemisches von oberflächenaktiven Mitteln, das wenigstens ein oberflächenaktives Mittel eines ersten Typs, das ein ethoxyliertes Acetylenglykol ist, und wenigstens ein oberflächenaktives Mittel eines zweiten Typs enthält, das ausgewählt ist aus der Gruppe bestehend aus oberflächenaktiven Mitteln auf Silikonbasis und fluorchemischen oberflächenaktiven Mitteln;

wobei alle Mengenangaben als relativ zu der gesamten Tintenzusammensetzung zu verstehen sind und wobei die Tintenzusammensetzung eine dynamische Oberflächenspannung von weniger als 35 mN/m, gemessen bei 10 Hz, und eine statische Oberflächenspannung, gemessen bei 0,1 Hz, von mehr als 21 mN/m aufweist, beide gemessen bei der Betriebstemperatur nach dem Blasendruckverfahren, wobei die Menge des Gemisches aus oberflächenaktiven Mitteln dazu ausreicht, die genannten dynamischen und statischen Oberflächenspannungen zu erhalten.

**2.** Tintenzusammensetzung nach Anspruch 1, bei der die Tintenzusammensetzung eine statische Oberflächenspannung von weniger als 30 mN/m hat.

**3.** Tintenzusammensetzung nach einem der vorstehenden Ansprüche, bei der das ethoxylierte Acetylenglykol eine allgemeine Struktur hat, die der nachstehenden Strukturformel genügt:

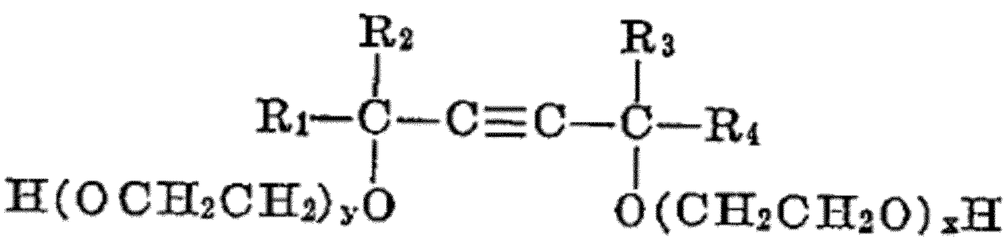

wobei $R_1$ und $R_4$ die gleichen oder verschiedene Alcylradikale sind, die 3 - 10 Kohlenstoffatome haben, und $R_2$ und $R_3$ gleich oder verschieden sind und ausgewählt sind aus Methyl und Ethyl, und x und y beide ganze Zahlen sind, deren Summe in Bereich von 3 bis 60 liegt.

**4.** Tintenzusammensetzung nach Anspruch 3, bei der $R_1$ und $R_4$ die gleichen Alcylradikale sind, die 3-6 Kohlenstoffatome haben, und $R_2$ und $R_3$ Methyl sind.

**5.** Tintenzusammensetzung nach einem der vorstehenden Ansprüche, bei der das oberflächenaktive Mittel des ersten Typs ein ethoxyliertes Acetylenglykol ist, ausgewählt aus der Gruppe bestehend aus ethoxyliertem 3-Methyl-1-nonyn-3-ol, ethoxyliertem 7,10-Dimethyl-8-hexadecyn-7,10-diol, ethoxyliertem 4,7-Dimethyl-5-decyn-4,7-diol, ethoxyliertem 2,4,7,9-Tetramethyl-5-Dezyn-4,7-Diol, ethoxyliertem 2,5,8,11-Tetramethyl-6-dodecyn-5,8-diol und Kombinationen hieraus.

**6.** Tintenzusammensetzung nach einem der vorstehenden Ansprüche, bei der das oberflächenaktive Mittel des ersten Typs ein ethoxyliertes Acetylenglykol ist, das ein zahlengemitteltes Molgewicht ($M_n$) in einem Bereich zwischen 300 g/mol und 800 g/mol hat.

**7.** Tintenzusammensetzung nach einem der vorstehenden Ansprüche, bei der das oberflächenaktive Mittel des zweiten Typs ein ethoxyliertes oberflächenaktives Mittel auf der Basis von Siloxan ist, das eine allgemeine Formel wie nachstehend wiedergegeben hat:

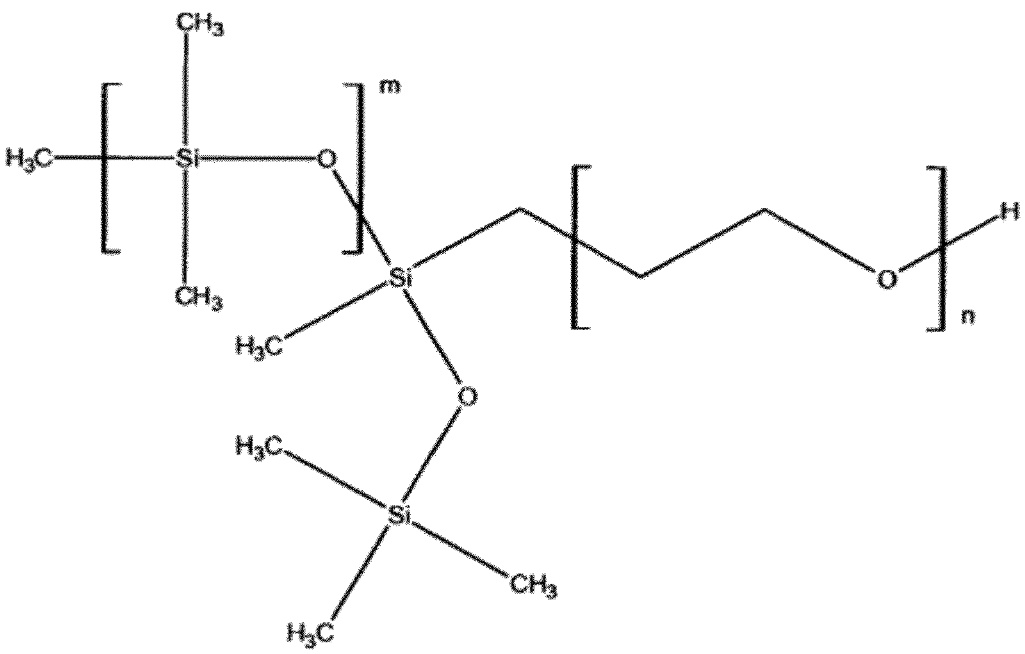

wobei m eine ganze Zahl von 1 bis 25 ist und n eine ganze Zahl von 1 bis 10 ist.

**8.** Tintenzusammensetzung nach einem der vorstehenden Ansprüche, bei der das Gemisch der oberflächenaktiven Mittel ein oberflächenaktives Mittel eines dritten Typs enthält, das ein Dialkyl-sulfosuccinat-Salz, insbesondere Natrium-dioktyl-sulfosuccinat ist.

**9.** Tintenzusammensetzung nach einem der vorstehenden Ansprüche, bei der das Gemisch der oberflächenaktiven Mittel in einer Gesamtmenge von 1-2 Gew.% relativ zu der gesamten Tintenzusammensetzung vorhanden ist.

**10.** Tintenzusammensetzung nach einem der vorstehenden Ansprüche, bei der das Gewichtsverhältnis zwischen den oberflächenaktiven Mitteln des ersten Typs und des zweiten Typs zwischen 1 und 10, vorzugsweise zwischen 1,5 und 5 beträgt.

**11.** Tintenzusammensetzung nach einem der vorstehenden Ansprüche, bei der das in Wasser dispergierbare Harz ausgewählt ist aus der Gruppe bestehend aus: Polyesterharzen, Polyurethanharzen, Polyepoxidharzen, Polyamidharzen, Polyesterharzen, Poly(meth)acrylharzen, Acryl-Silikonharzen, Harzen auf Fluorbasis, Polyolefinharzen, Harzen auf Polystyrolbasis, Harzen auf Polybutadienbasis, Harzen auf der Basis von Polyvinylacetat, Harzen auf der Basis von Polyvinylalkohol, Harzen auf der Basis von Polyvinylester, Harzen auf der Basis von Polyvinylchlorid, Harzen auf der Basis von Polyacrylsäure, Harzen auf der Basis von ungesättigten Karboxylsäuren und Copolymeren wie etwa Styrol-Acrylat-Copolymerharzen, Styrol-Butadien-Copolymerharzen.

**12.** Tintenzusammensetzung nach einem der vorstehenden Ansprüche, bei der das Co-Lösungsmittel ein wasserlösliches organisches Lösungsmittel enthält, das ausgewählt ist aus der Gruppe bestehend aus: mehrwertigen Alkoholen, mehrwertigen Alkoholalcylethem, mehrwertigen Alkoholarylethern, stickstoffhaltigen heterozyklischen Verbindungen, Amiden, Aminen, Ammoniumverbindungen, schwefelhaltigen Verbindungen, Propylencarbonat und Ethylencarbonat.

**13.** Tintenzusammensetzung nach einem der vorstehenden Ansprüche, bei der die Tintenzusammensetzung ein Gemisch aus wasserlöslichen organischen Lösungsmitteln enthält, wobei jedes wasserlösliche organische Lösungsmittel in einer Menge von 1 Gew.% bis 50 Gew.% in Bezug auf die gesamte Tintenzusammensetzung vorhanden ist.

**14.** Tintenzusammensetzung nach Anspruch 13, bei der das Gemisch der wasserlöslichen organischen Lösungsmittel ein erstes wasserlösliches organisches Lösungsmittel, das eine erste relative Dielektrizitätskonstante hat, und ein zweites wasserlösliches organisches Lösungsmittel enthält, das eine zweite relative Dielektrizitätskonstante hat, wobei die Differenz zwischen der ersten relativen Dielektrizitätskonstanten und der zweiten Dielektrizitätskonstanten mehr als 5, vorzugsweise zwischen 10 und 50 beträgt.

**15.** Tintenzusammensetzung nach einem der vorstehenden Ansprüche, bei der die Tintenzusammensetzung wenigstens ein oligomeres oder polymeres Co-Lösungsmittel enthält, insbesondere wenigstens eines, das ausgewählt ist aus der Gruppe bestehend aus Polyethylenglycolen und Polyethylenglycol(di)methylethern.

## Revendications

**1.** Composition d'encre, appropriée pour être éjectée à partir d'un dispositif de marquage à jet d'encre à une température de fonctionnement entre 15 °C et 50 °C, la composition d'encre comprenant:

- 1 à 40 % en poids d'une résine dispersible dans l'eau ;
- 0,5 à 15 % en poids d'un colorant dispersible dans l'eau ;
- 20 à 80 % en poids d'eau ;
- 0 à 75 % en poids d'un cosolvant ;
- 0,01 à 3 % en poids d'un mélange d'agents de surface comprenant au moins un agent de surface d'un premier type étant un acétylène glycol éthoxylé et d'au moins un agent de surface d'un second type sélectionné à partir du groupe constitué par des agents de surface à la silicone et des agents de surface fluorés ;

dans laquelle toutes les quantités sont relatives à la composition d'encre totale, et dans laquelle la composition d'encre a une tension superficielle dynamique de moins de 35 mN/m mesurés à 10 Hz et une tension superficielle statique mesurée à 0,1 Hz de plus de 21 mN/m toutes les deux déterminées à la température de fonctionnement avec le procédé de pression de bulle, dans laquelle la quantité du mélange d'agents de surface est suffisante pour obtenir lesdites tensions superficielles dynamique et statique.

**2.** Composition d'encre selon la revendication 1, dans laquelle la composition d'encre a une tension superficielle statique au-dessous de 30 mN/m.

**3.** Composition d'encre selon n'importe laquelle des revendications précédentes, dans laquelle l'acétylène glycol éthoxylé a une structure globale satisfaisant à la formule ci-dessous :

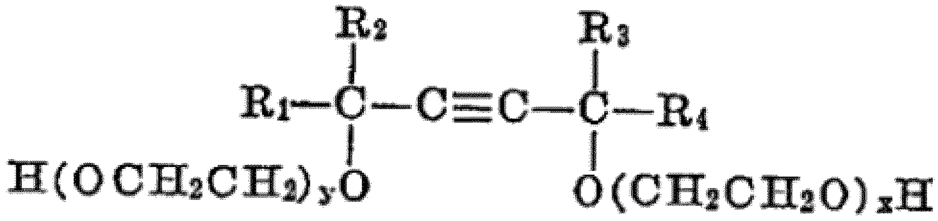

dans laquelle $R_1$ et $R_4$ sont les mêmes radicaux alkyle ou différents ayant de 3 à 10 atomes de carbone et $R_2$ et $R_3$ sont les mêmes ou différents et sélectionnés à partir du méthyle et de l'éthyle et x et y sont tous les deux entiers et ont une somme dans la plage de 3 à 60.

**4.** Composition d'encre selon la revendication 3, dans laquelle $R_1$ et $R_4$ sont les mêmes radicaux alkyle ayant de 3 à 6 atomes de carbone et $R_2$ et R3 sont du méthyle.

**5.** Composition d'encre selon n'importe laquelle des revendications précédentes, dans laquelle l'agent de surface du premier type est un acétylène glycol éthoxylé, sélectionné à partir du groupe constitué par le 3-méthyl-1-nonyn-3-ol éthoxylé, 7,10-diméthyl-8-hexadécyne-7,10-diol éthoxylé, 4,7-diméthyl-5-décyne-4,7-diol éthoxylé, 2,4,7,9-tétraméthyl-5-décyne-4,7-diol éthoxylé, 2,5,8,11-tétraméthyl-6-dodécyne-5,8-diol éthoxylé, et des combinaisons de ceux-ci.

**6.** Composition d'encre selon n'importe laquelle des revendications précédentes, dans laquelle l'agent de surface du premier type est un acétylène glycol éthoxylé ayant une masse molaire moyenne en nombre (Mn) dans une plage entre 300 g/mol et 800 g/mol.

**7.** Composition d'encre selon n'importe laquelle des revendications précédentes, dans lequel l'agent de surface du second type est un agent de surface de siloxane éthoxylé, ayant une formule globale comme on le montre ci-dessous :

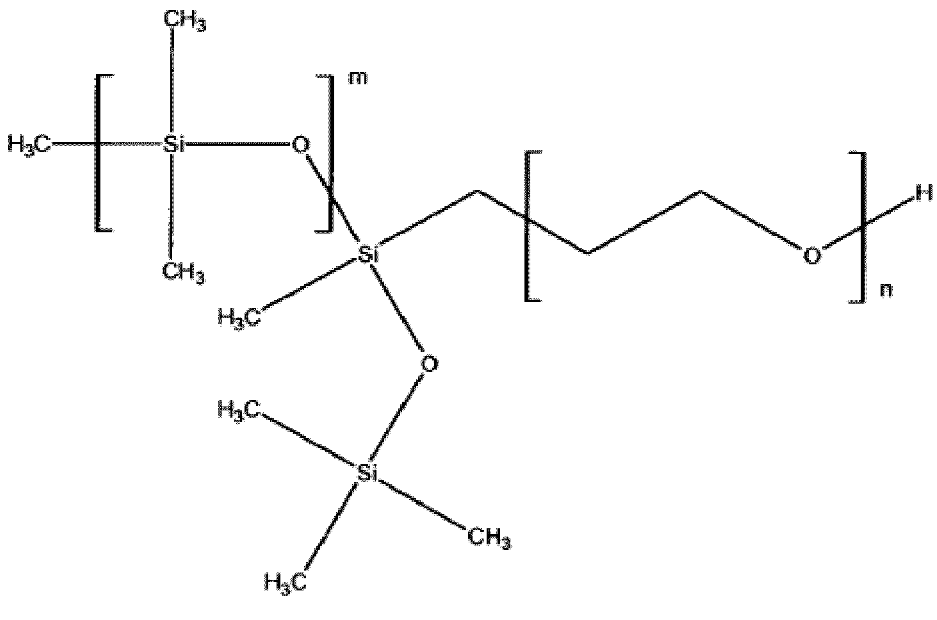

dans laquelle, m est un entier allant de 1 à 25 et dans laquelle n est un entier allant de 1 à 10.

**8.** Composition d'encre selon n'importe laquelle des revendications précédentes, dans laquelle le mélange d'agents de surface comprend un agent de surface d'un troisième type qui est un sel de sulfosuccinate de dialkyle, en particulier du sulfosuccinate de dioctyle sodique.

**9.** Composition d'encre selon n'importe laquelle des revendications précédentes, dans lequel le mélange d'agents de surface est présent en une quantité totale de 1 à 2 % en poids par rapport à la composition d'encre totale.

**10.** Composition d'encre selon n'importe laquelle des revendications précédentes, dans laquelle le rapport pondéral entre l'agent de surface du premier type et l'agent de surface du second type est entre 1 et 10, de préférence entre 1,5 et 5.

**11.** Composition d'encre selon n'importe laquelle des revendications précédentes, dans laquelle la résine dispersible dans l'eau est sélectionnée à partir du groupe constitué par : des résines de polyester, résines de polyuréthane, résines polyépoxydes, résines de polyamide, résines de polyéther, résines poly(méth)acryliques, résines d'acryle-silicone, résines à base de fluor, résines de polyoléfine, résines à base de polystyrène, résines à base de polybutadiène, résines à base d'acétate de polyvinyle, résines à base d'alcool de polyvinyle, résines à base d'ester de polyvinyle, résines à base de chlorure de polyvinyle, résines à base d'acide polyacrylique, résines à base d'acide carboxylique non saturé et résines de copolymères comme un copolymère de styrène-acrylate, résines de copolymère de styrène-butadiène.

**12.** Composition d'encre selon n'importe laquelle des revendications précédentes, dans laquelle le cosolvant comprend un solvant organique hydrosoluble étant sélectionné à partir du groupe constitué par :

des alcools polyhydriques, éthers d'alkyle d'alcool polyhydrique, éthers d'aryle d'alcool polyhydrique, composés hétérocycliques contenant de l'azote, amides, amines, composés d'ammonium, composés contenant du soufre, carbonate de propylène et carbonate d'éthylène.

**13.** Composition d'encre selon n'importe laquelle des revendications précédentes, dans laquelle la composition d'encre comprend un mélange de solvants organiques hydrosolubles, chaque solvant organique hydrosoluble étant présent en une quantité entre 1 % en poids à 50 % en poids, par rapport à la composition d'encre totale.

**14.** Composition d'encre selon la revendication 13, dans laquelle le mélange de solvants organiques hydrosolubles comprend un premier solvant organique hydrosoluble ayant une première constante diélectrique relative et un second solvant organique hydrosoluble ayant une seconde constante diélectrique relative, dans lesquelles la différence entre la première constante diélectrique relative et la seconde constante diélectrique est supérieure à 5, de préférence entre 10 et 50.

**15.** Composition d'encre selon n'importe laquelle des revendications précédentes, dans laquelle la composition d'encre comprend au moins un cosolvant oligomérique ou polymère, en particulier au moins un sélectionné à partir du groupe constitué de polyéthylène glycols et d'éthers (di)méthyliques de polyéthylène glycol.

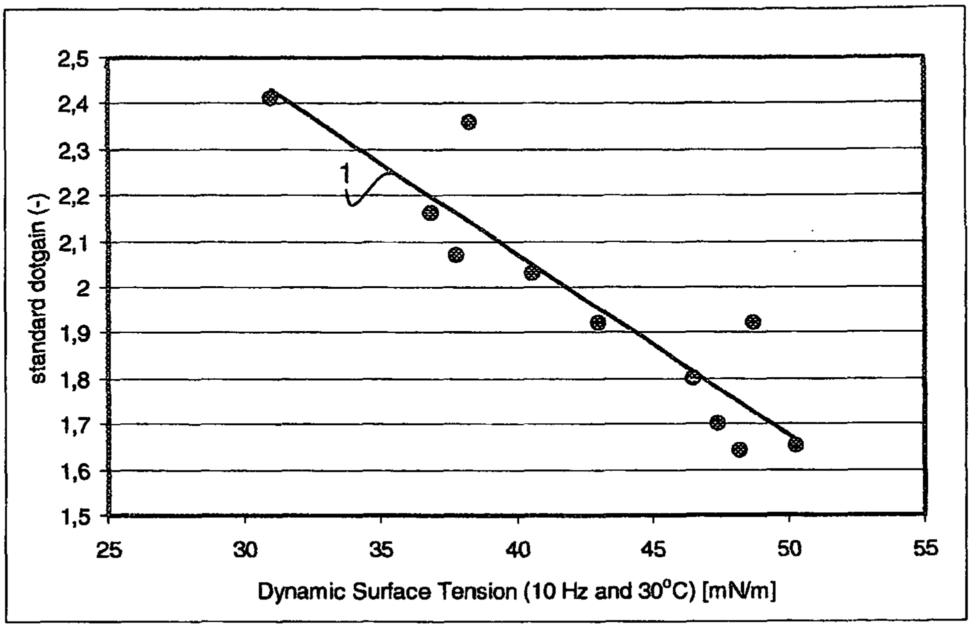
2,5
2,4
2,3
2,2
2,1
2
1,9
1,8
1,7
1,6
1,5
standard dotgain (-)
1
25
30
35
40
45
50
55
Dynamic Surface Tension (10 Hz and 30°C) [mN/m]

Fig. 1

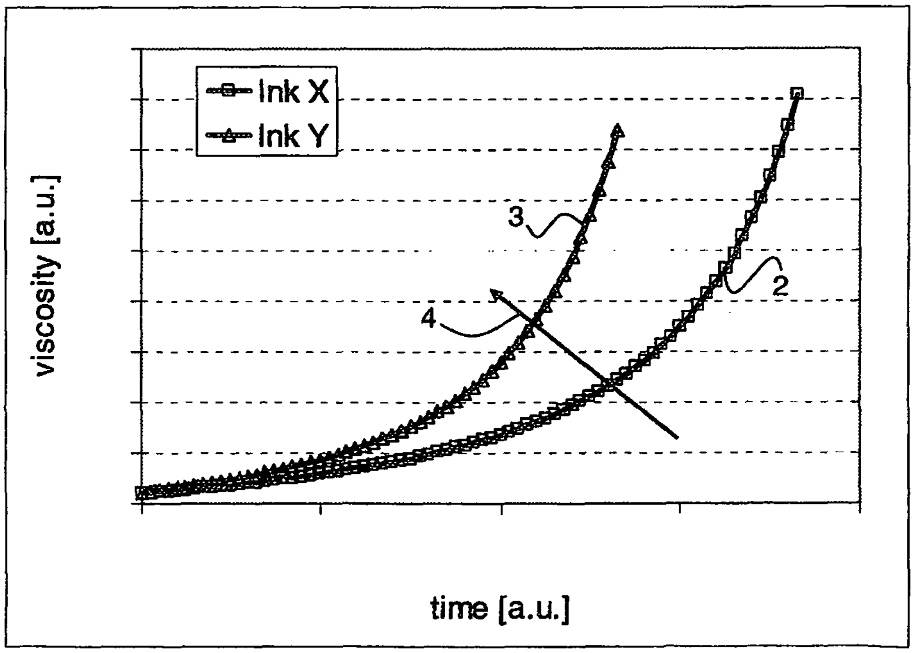
Ink X
Ink Y
viscosity [a.u.]
3
4
2
time [a.u.]

Fig. 2

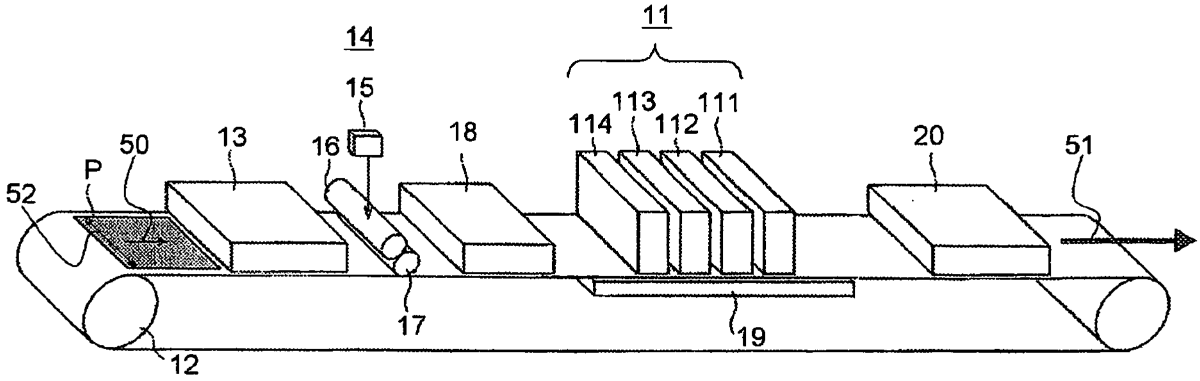
11
14
15
113
111
114
112
13
16
18
20
50
51
P
52
17
19
12

Fig. 3

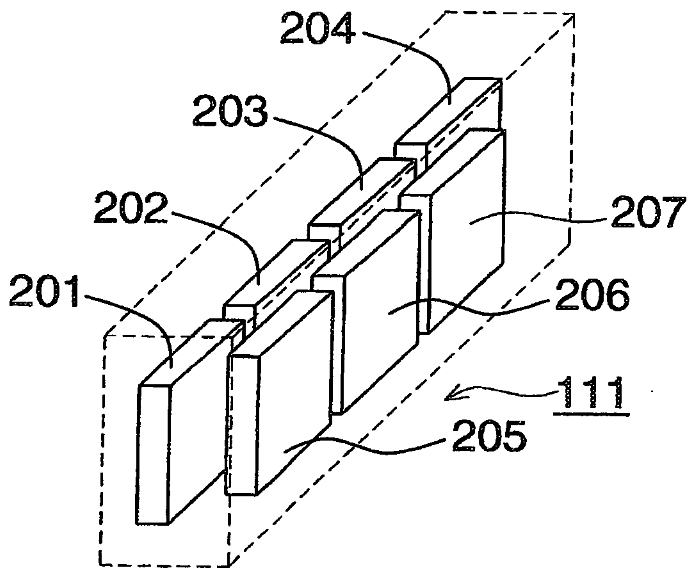
204
203
202
207
201
206
111
205

Fig. 4A

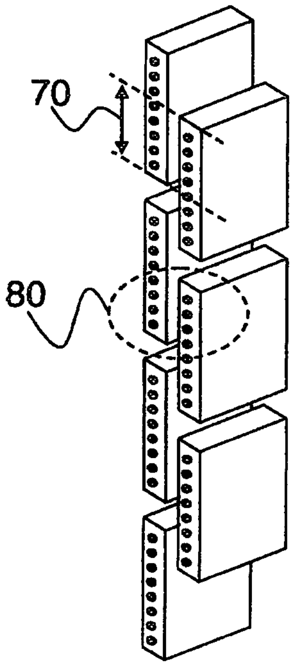


Fig. 4B

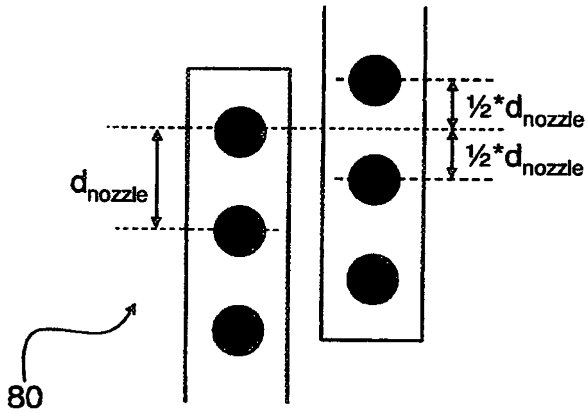


Fig. 4C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2233309 A2
- WO 2011021591 A
- JP 2000053897 A
- JP 2001139849 A